# EUROPEAN PATENT APPLICATION

(11) **EP 3 962 143 A1**
(43) Date of publication of application: **02.03.2022**
(21) Application number: 20794431.5
(22) Date of filing: 08.04.2020
(51) Int. Cl.: H04W 16/26, H04W 80/02, H04W 88/08

(54) **COMMUNICATION DEVICE, CONTROLLER, SYSTEM, AND METHOD**

(30) Priority: 22.04.2019 JP 2019081342; 13.05.2019 JP 2019090641
(71) Applicant: NEC Corporation, 108-8001 Tokyo (JP)
(72) Inventor: NAKATA, Atsushi, Tokyo 108-8001 (JP); OGURA, Daisuke, Tokyo 108-8001 (JP)
(74) Representative: MacDougall, Alan John Shaw
(86) International application number: PCT/JP2020/015803
(87) International publication number: WO 2020/217989

(57) **Abstract**

In order to further facilitate implementation of communication of a C/U-plane via an intermediate node 200, a communication apparatus according to an aspect of the present invention includes: an information obtaining unit configured to obtain management information indicating correspondence relationship between an address of an intermediate node and an address of a radio unit performing radio frequency processing, the intermediate node being a node transmitting signals between the radio unit and a radio access network node communicating with one or more user equipments via the radio unit, the address of the intermediate node being used by the intermediate node to connect to the radio unit for communication of a control/user plane, the address of the radio unit being used by the radio unit to connect to the intermediate node for communication of the control/user plane; and a communication processing unit configured to transmit the management information to a controller controlling a configuration of the radio unit.

## Description

### BACKGROUND

### Technical Field

The present invention relates to a communication apparatus, a controller, a system, and a method.

### Background Art

The following configuration has been known: when a base station communicates with a user equipment (UE) via a plurality of remote radio apparatuses (RREs), an intermediate node is arranged between a main body of the base station and the plurality of RREs (NPL 1). The intermediate node is, for example, a fronthaul multiplexer (FHM), or an RRE of a cascade configuration. The FHM duplicates a downlink signal for a cell, and transmits the downlink signal to two or more RREs forming the cell. Further, the FHM combines uplink signals received from the two or more RREs, and transmits the combined uplink signal to the main body of the base station.

Further, in open radio access network (O-RAN) Alliance, a management interface between an O-RAN Radio Unit (O-RU) controller and an O-RU has been studied (NPL 2).

### Citation List

### Non Patent Literature

[NPL 1] NTT DOCOMO Technical Journal Vol.18 No.2, p8-13, "Base-station Equipment with the Aim of Introducing 3.5- GHz band TD-LTE" <URL: https://www.nttdocomo.co.jp/english/binary/pdf/corporate/technology/rd/technical_jour nal/bn/vol18_2/vol18_2_003en.pdf>
[NPL 2] ORAN-WG4.MP.0-v01.00, Technical Specification, "O-RAN Alliance Working Group 4 Management Plane Specification"

### SUMMARY

### Technical Problem

When an O-RAN Distributed Unit (O-DU) communicates with a UE via a plurality of O-RUs, an intermediate node may be arranged between the O-DU and any of the O-RUs, and communication of a control/user plane (C/U-plane) may be performed via the intermediate node between the O-DU and the O-RU. However, a mechanism for an O-RU controller to obtain management information necessary for performing such communication has not yet been specified. Thus, at the present time, it is difficult to implement communication of the C/U-plane via the intermediate node between the O-DU and the O-RU.

The example object of the present invention is to provide a communication apparatus, a controller, a system, and a method that further facilitate implementation of communication of a control/user plane (C/U-plane) via an intermediate node.

### Solution to Problem

A communication apparatus according to an aspect of the present invention includes: an information obtaining unit configured to obtain management information indicating correspondence relationship between an address of an intermediate node and an address of a radio unit performing radio frequency processing, the intermediate node being a node transmitting signals between the radio unit and a radio access network node communicating with one or more user equipments via the radio unit, the address of the intermediate node being used by the intermediate node to connect to the radio unit for communication of a control/user plane, the address of the radio unit being used by the radio unit to connect to the intermediate node for communication of the control/user plane; and a communication processing unit configured to transmit the management information to a controller controlling a configuration of the radio unit.

A controller according to an aspect of the present invention includes a communication processing unit configured to receive management information indicating correspondence relationship between an address of an intermediate node and an address of a radio unit performing radio frequency processing, the intermediate node being a node transmitting signals between the radio unit and a radio access network node communicating with a user equipment via the radio unit, the address of the intermediate node being used by the intermediate node to connect to the radio unit for communication of a control/user plane, the address of the radio unit being used by the radio unit to connect to the intermediate node for communication of the control/user plane, and to control a configuration of the radio unit or the intermediate node based on the management information.

A system according to an aspect of the present invention includes: a communication apparatus configured to transmit management information to a controller, the management information indicating correspondence relationship between an address of an intermediate node and an address of a radio unit performing radio frequency processing, the intermediate node being a node transmitting signals between the radio unit and a radio access network node communicating with one or more user equipments via the radio unit, the address of the intermediate node being used by the intermediate node to connect to the radio unit for communication of a control/user plane, the address of the radio unit being used by the radio unit to connect to the intermediate node for communication of the control/user plane, the controller being controlling a configuration of the radio unit; and the controller configured to receive the management information and control the configuration of the radio unit or the intermediate node, based on the management information.

A method according to an aspect of the present invention includes: obtaining management information indicating correspondence relationship between an address of an intermediate node and an address of a radio unit performing radio frequency processing, the intermediate node being a node transmitting signals between the radio unit and a radio access network node communicating with one or more user equipments via the radio unit, the address of the intermediate node being used by the intermediate node to connect to the radio unit for communication of a control/user plane, the address of the radio unit being used by the radio unit to connect to the intermediate node for communication of the control/user plane; and transmitting the management information to a controller controlling a configuration of the radio unit.

### Advantageous Effects of Invention

According to the present invention, implementation of communication of the control/user plane (C/U-plane) via the intermediate node is further facilitated. Note that, according to the present invention, instead of or together with the above effects, other effects may be exerted.

### BRIEF DESCRIPTION OF THE DRAWINGS

Fig. 1 is a diagram illustrating a 5G-gNB studied in O-RAN Alliance, and a function of managing the 5G-gNB;
Fig. 2 is a diagram illustrating a C/U-plane and a management plane (M-plane) of O-RAN;
Fig. 3 is a diagram illustrating an example in which an FHM is arranged in O-RAN;
Fig. 4 is a diagram illustrating an example of a cascade configuration of O-RUs;
Fig. 5 is a diagram illustrating an example of a schematic configuration of a system 10 according to a first example embodiment;
Fig. 6 is a diagram illustrating a first example of connection of the M-plane and the C/U-plane according to the first example embodiment;
Fig. 7 is a diagram illustrating a second example of connection of the M-plane and the C/U-plane according to the first example embodiment;
Fig. 8 is a diagram illustrating an example of a protocol stack for communication of the M-plane and the C/U-plane between an RAN node and an RU via an intermediate node;
Fig. 9 is a diagram illustrating an example of a protocol stack for communication of the M-plane and the C/U-plane between the RAN node and the intermediate node;
Fig. 10 is a diagram illustrating an example of ALIASMAC-INTERFACE;
Fig. 11 is a diagram illustrating a first specific example of the system according to the first example embodiment;
Fig. 12 is a diagram illustrating a second specific example of the system according to the first example embodiment;
Fig. 13 is a diagram illustrating a third specific example of the system according to the first example embodiment;
Fig. 14 is a diagram illustrating a fourth specific example of the system according to the first example embodiment;
Fig. 15 is a block diagram illustrating an example of a schematic configuration of the RAN node according to the first example embodiment;
Fig. 16 is a block diagram illustrating an example of a schematic configuration of the intermediate node according to the first example embodiment;
Fig. 17 is a block diagram illustrating an example of a schematic configuration of the RU according to the first example embodiment;
Fig. 18 is a flowchart for describing an example of a schematic procedure of processing of the RAN node according to the first example embodiment;
Fig. 19 is a diagram illustrating an example of ietf-interface of the intermediate node according to the first example embodiment;
Fig. 20 is a diagram illustrating an example of correspondence relationship between flows of the first specific example of the system according to the first example embodiment;
Fig. 21 is a diagram illustrating an example of a configuration of correspondence relationship between flows of the first specific example of the system according to the first example embodiment;
Fig. 22 is a diagram illustrating an example of correspondence relationship between flows of the third specific example of the system according to the first example embodiment;
Fig. 23 is a diagram illustrating an example of a configuration of correspondence relationship between flows of the third specific example of the system according to the first example embodiment;
Fig. 24 is a diagram illustrating an example of correspondence relationship between flows of the second specific example of the system according to the first example embodiment;
Fig. 25 is a diagram illustrating an example of a configuration of correspondence relationship between flows of the second specific example of the system according to the first example embodiment;
Fig. 26 is a diagram illustrating an example of flows of a first example alteration of the first specific example of the system according to the first example embodiment;
Fig. 27 is a diagram illustrating an example of flows of a first example alteration of the second specific example of the system according to the first example embodiment;
Fig. 28 is a diagram illustrating an example of flows of a first example alteration of the third specific example of the system according to the first example embodiment;
Fig. 29 is a diagram illustrating an example of flows of a first example alteration of the fourth specific example of the system according to the first example embodiment;
Fig. 30 is a diagram illustrating an example of ietf-interface of an RU according to the first example alteration of the first example embodiment;
Fig. 31 is a diagram illustrating an example of a schematic configuration of a system 10 according to a second example embodiment;
Fig. 32 is a block diagram illustrating an example of a schematic configuration of a controller according to the second example embodiment; and
Fig. 33 is a block diagram illustrating an example of a schematic configuration of a communication apparatus according to the second example embodiment.

### DESCRIPTION OF THE EXAMPLE EMBODIMENTS

Hereinafter, example embodiments of the present invention will be described in detail with reference to the accompanying drawings. Note that, in the Specification and drawings, elements to which similar descriptions are applicable are denoted by the same reference signs, and overlapping descriptions may hence be omitted.

Descriptions will be given in the following order.
1. Related Art
2. First Example Embodiment
   2.1. Configuration of System
   2.2. Configuration of RAN Node
   2.3. Configuration of Intermediate Node
   2.4. Configuration of RU
   2.5. Technical Features
   2.6. Example Alterations
   2.7. Additional Notes
3. Second Example Embodiment
   3.1. Configuration of System
   3.2. Configuration of Controller
   3.3. Configuration of Communication Apparatus
   3.4. Technical Features

### <<1. Related Art>>

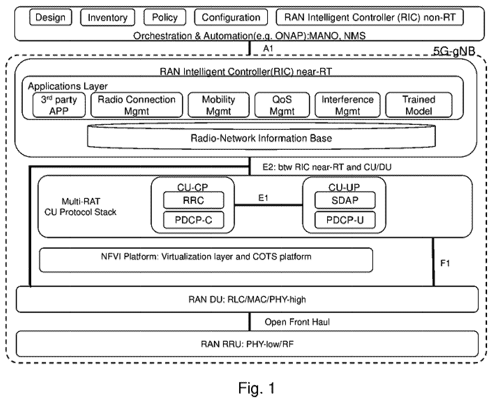

With reference to Fig. 1 to Fig. 4, techniques related to example embodiments of the present invention will be described.

### (1) O-RAN

Fig. 1 illustrates a 5G-gNB (a base station of the fifth generation) studied in O-RAN Alliance, and a function of managing the 5G-gNB. With reference to Fig. 1, the 5G-gNB includes a RAN Intelligent Controller (RIC), a central unit (CU), a distributed unit (DU), and a radio unit (RU). In particular, in an O-RAN, the DU is referred to as an O-RAN DU (O-DU), and the RU is referred to as an O-RAN RU (O-RU).

For example, in working group 4 (WG4) of O-RAN Alliance, an open fronthaul interface between the O-DU and the O-RU is under study.

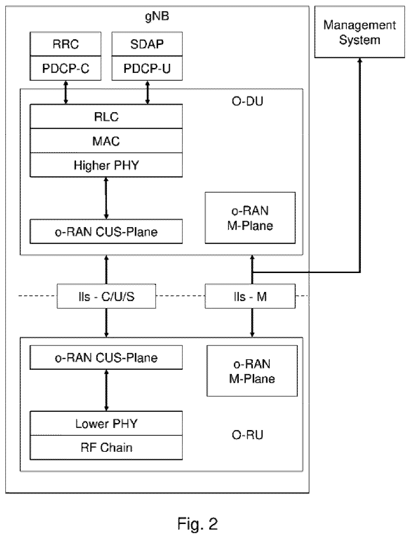

Fig. 2 illustrates a C/U-plane and a management plane (M-plane) of the O-RAN. With reference to Fig. 2, in the O-RAN, the O-DU and the O-RU in the gNB are connected to each other in the C/U-plane and the M-plane. There is no special node between the O-DU and the O-RU. The O-RU is also permitted to include an interface of the M-plane with a network management system (NMS).

### (2) Intermediate Node

In the O-RAN, an intermediate node is arranged between the O-DU and the O-RU, and the intermediate node may transmit a signal between the O-DU and the O-RU.

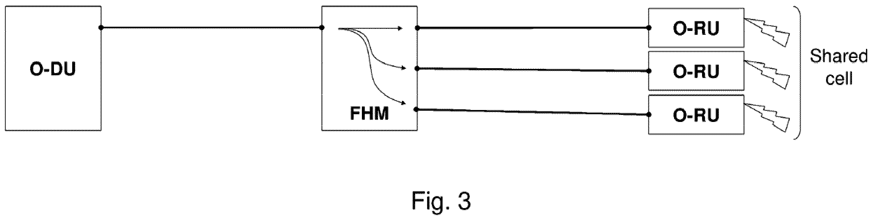

Fig. 3 illustrates an example in which an FHM is arranged in the O-RAN. With reference to Fig. 3, the FHM is arranged between the O-DU and the O-RUs. The FHM can duplicate a downlink signal (a signal from the O-DU to the O-RUs), and transmit the same downlink signal to the plurality of O-RUs. The FHM can combine uplink signals (signals from the O-RUs to the O-DU) from the plurality of O-RUs. In such a case, the plurality of O-RUs transmit and receive common radio signals, and form one logical cell.

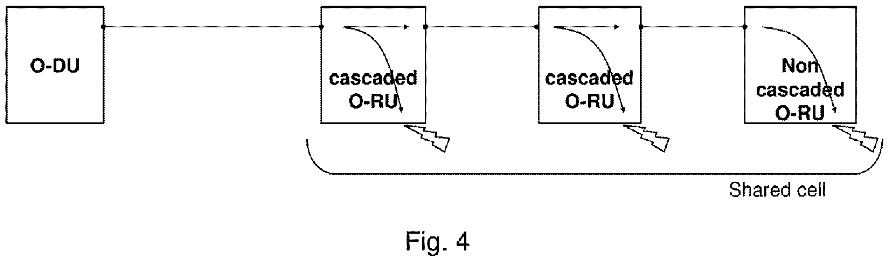

Fig. 4 illustrates an example of a cascade configuration of the O-RUs. With reference to Fig. 4, in the cascade configuration of the O-RU, the O-DU and a plurality of O-RUs are connected in series. In the cascade configuration, a Cascaded O-RU duplicates a downlink signal, transmits the downlink signal to its neighboring O-RU, and the Cascaded O-RU itself also transmits the downlink signal to a UE by radio. The Cascaded O-RU combines an uplink signal from the neighboring O-RU, and an uplink signal received by the Cascaded O-RU itself by radio. In such a cascade configuration, the plurality of O-RUs transmit and receive common radio signals, and form one logical cell.

The logical cell described above may also be referred to as a shared cell.

Combining of the uplink signals is not limited to simple combining (for example, calculation of the sum or the average), but may be selective combining (for example, selection of one uplink signal, simple combining of a plurality of selected uplink signals, simple combining of a plurality of weighted uplink signals, or the like).

### <<2. First Example Embodiment>>

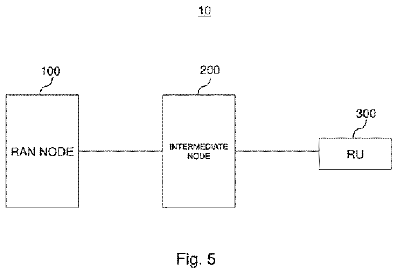

Next, with reference to Fig. 5 to Fig. 30, the first example embodiment of the present invention will be described.

### <2.1. Configuration of System>

With reference to Fig. 5 to Fig. 14, an example of a configuration of a system according to the first example embodiment will be described.

Fig. 5 illustrates an example of a schematic configuration of a system 10 according to the first example embodiment. With reference to Fig. 5, the system 10 includes a radio access network node (RAN) node 100, an intermediate node 200, and a radio unit (RU) 300.

For example, the system according to the first example embodiment conforms to technical specifications (TSs) of the Third Generation Partnership Project (3GPP). In addition, for example, the system according to the first example embodiment also conforms to technical specifications (TSs) of O-RAN Alliance. In this case, for example, the RAN node 100 is an O-DU, and the RU 300 is an O-RU. As a matter of course, the system according to the first example embodiment is not limited to these examples.

Note that Fig. 1 illustrates only a single intermediate node 200 and a single RU 300; however, the system 10 may include a plurality of intermediate nodes 200 and/or a plurality of RUs 300 as will be described later.

### (1) Each Node

### - RAN Node 100

The RAN node 100 communicates with one or more user equipments (UEs) via the RU 300. For example, the RAN node 100 transmits a downlink signal to the UE via the RU 300, and receives an uplink signal via the RU 300.

When the system 10 includes a plurality of RUs, the RAN node 100 communicates with one or more user equipments via the plurality of RUs.

For example, the RAN node 100 is a first RAN node configured to perform processing of at least one lower protocol layer in a protocol stack of a radio access network (RAN). For example, the at least one lower protocol layer includes a radio link control (RLC) layer, a media access control (MAC) layer, and a higher physical (High PHY) layer.

For example, the RAN node 100 (the first RAN node) is connected to a second RAN node configured to perform processing of at least one higher protocol layer in the protocol stack. For example, the at least one higher protocol layer includes a packet data convergence protocol (PDCP) layer, a radio resource control (RRC) layer, and a service data adaptation protocol (SDAP) layer.

Specifically, for example, similarly to the example of Fig. 1, the RAN node 100 (the first RAN node) is a DU (for example, an O-DU), and the second RAN node is a CU (for example, an O-CU). Note that a plurality of first RAN nodes (for example, O-DUs) may be connected to the second RAN node (for example, the O-CU).

In addition, for example, the RAN node 100 also operates as a controller configured to control a configuration of the RU 300. Specifically, for example, the RU 300 is an O-RU, and the RAN node 100 operates as an O-RU controller configured to control a configuration of the RU 300.

### - RU 300

The RU 300 performs radio frequency (RF) processing. For example, the RU 300 further performs processing of a lower physical (Low PHY) layer as well.

### - Intermediate Node 200

The intermediate node 200 transmits a signal between the RAN node 100 and the RU 300. The intermediate node 200 may be an FHM, or may be an RU in a cascade configuration (in other words, a cascaded RU). Alternatively, the intermediate node 200 may be a combination of an FHM and an RU in a cascade configuration. Specific operation of the intermediate node 200 will be described later in detail.

### (2) M-plane and C/U-plane

### - First Example: Case of FHM

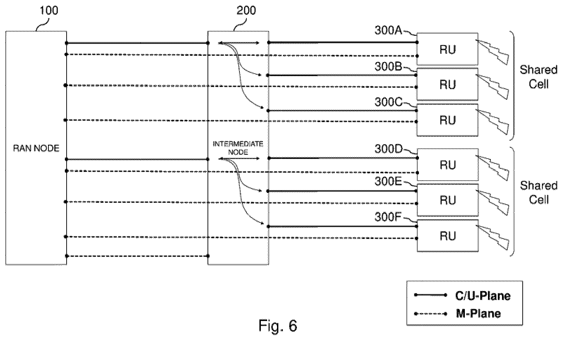

Fig. 6 illustrates a first example of connection of the M-plane and the C/U-plane according to the first example embodiment. With reference to Fig. 6, in the first example, the system 10 includes six RUs 300 (RUs 300A, 300B, 300C, 300D, 300E, and 300F), and the intermediate node 200 is an FHM

The RAN node 100 establishes connection for the M-plane with each RU 300, and connection for the M-plane with the intermediate node 200. For example, these connections for the M-plane are each a connection (for example, NETCONF Connection) of a protocol used for a configuration of a network. The RAN node 100 performs management of the intermediate node 200 and each RU 300 by using these connections for the M-plane.

In addition, the RAN node 100 establishes connection with the intermediate node 200 for communication of the C/U-plane for each logical cell (shared cell). Connection between the intermediate node 200 and each RU 300 is also established for communication of the C/U-plane. The intermediate node 200 performs duplication processing of a downlink signal (downlink traffic), and combining processing of uplink signals (uplink traffic).

The RAN node 100 communicates with one or more UEs via six RUs 300 (RUs 300A, 300B, 300C, 300D, 300E, and 300F). The intermediate node 200 transmits a signal between the RAN node 100 and the six RUs 300.

For example, the RAN node 100 communicates with one or more UEs via the RUs 300A, 300B, and 300C, and the intermediate node 200 transmits a signal between the RAN node 100 and the RUs 300A, 300B, and 300C. Specifically, the intermediate node 200 receives a downlink signal transmitted via the RUs 300A, 300B, and 300C (from the RAN node 100), duplicates the downlink signal, and transmits the downlink signal to the RUs 300A, 300B, and 300C. The intermediate node 200 combines uplink signals received via the RUs 300A, 300B, and 300C, and transmits the combined uplink signal (to the RAN node 100). The RUs 300A, 300B, and 300C transmit common downlink signals, and receive common uplink signals, and thus form one shared cell.

For example, the RAN node 100 communicates with one or more UEs via the RUs 300D, 300E, and 300F, and the intermediate node 200 transmits a signal between the RAN node 100 and the RUs 300D, 300E, and 300F. Specifically, the intermediate node 200 receives a downlink signal transmitted via the RUs 300D, 300E, and 300F (from the RAN node 100), duplicates the downlink signal, and transmits the downlink signals to the RUs 300D, 300E, and 300F. The intermediate node 200 combines uplink signals received via the RUs 300D, 300E, and 300F, and transmits the combined uplink signal (to the RAN node 100). The RUs 300D, 300E, and 300F transmit common downlink signals, and receive common uplink signals, and thus form one shared cell.

Combining of the uplink signals may be simple combining (for example, calculation of the sum or the average), or may be selective combining (for example, selection of one uplink signal, simple combining of a plurality of selected uplink signals, simple combining of a plurality of weighted uplink signals, or the like). More generally, combining of the uplink signals means generation of an appropriate uplink signal, based on a plurality of uplink signals. Note that the same holds true for the combining processing to be described later.

Note that, in the example illustrated in Fig. 6, the system 10 includes six RUs 300; however, the system 10 may include two to five RUs 200, or may include seven or more RUs 300. In other words, more generally, the system 10 may include two or more RUs 300.

### - Second Example: Case of Cascade Configuration

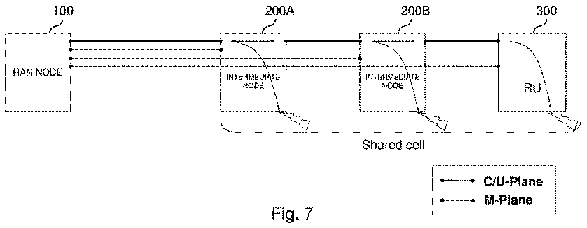

Fig. 7 illustrates a second example of connection of the M-plane and the C/U-plane according to the first example embodiment. With reference to Fig. 7, in the second example, the system 10 includes two intermediate nodes 200 (intermediate nodes 200A and 200B) that each also operate as an RU, and an RU 300. In other words, in the second example, the system 10 has a cascade configuration, and the two intermediate nodes 200 are cascaded RUs (for example, cascaded O-RUs).

The RAN node 100 establishes connection for the M-plane with each intermediate node 200, and connection for the M-plane with the RU 300. For example, these connections for the M-plane are each a NETCONF Connection. The RAN node 100 performs management of each intermediate node 200 and the RU 300 by using these connections for the M-plane.

In addition, the RAN node 100 establishes connection with the intermediate node 200 (specifically, the intermediate node 200A) for communication of the C/U-plane for each logical cell (shared cell). For communication of the C/U-plane, connection between the intermediate node 200A and the intermediate node 200B and connection between the intermediate node 200B and the RU 300 are also established. Each intermediate node 200 performs duplication processing of a downlink signal (downlink traffic), and combining processing of uplink signals (uplink traffic).

The RAN node 100 communicates with one or more UEs via three RUs (the intermediate nodes 200A and 200B and the RU 300). The three RUs and the RAN node 100 are connected in series. The intermediate node 200A transmits a signal between the RAN node 100 and the intermediate node 200B, and the intermediate node 200B transmits a signal between the intermediate node 200A and the RU 300. Specifically, the intermediate node 200A receives a downlink signal transmitted via the three RUs (the intermediate nodes 200A and 200B and the RU 300), duplicates the downlink signal, and transmits the downlink signal to the intermediate node 200B. The intermediate node 200B also receives the downlink signal, duplicates the downlink signal, and transmits the downlink signal to the RU 300. The intermediate node 200B combines uplink signals received via the intermediate node 200B (RU) and the RU 300, and transmits the combined uplink signal (to the intermediate node 200A). The intermediate node 200A combines uplink signals received via the intermediate nodes 200A and 200B (RUs) and the RU 300 (in other words, the combined uplink signal received from the intermediate node 200B and the uplink signal received via the intermediate node 200A), and transmits the combined uplink signal (to the RAN node 100).

Note that, in the example illustrated in Fig. 7, the system 10 includes three RUs; however, the system 10 may include two RUs (the intermediate node 200 and the RU 300), or may include four or more RUs (three or more intermediate nodes 200 and the RU 300). In other words, more generally, the system 10 may include two or more RUs.

### - Protocol Stack

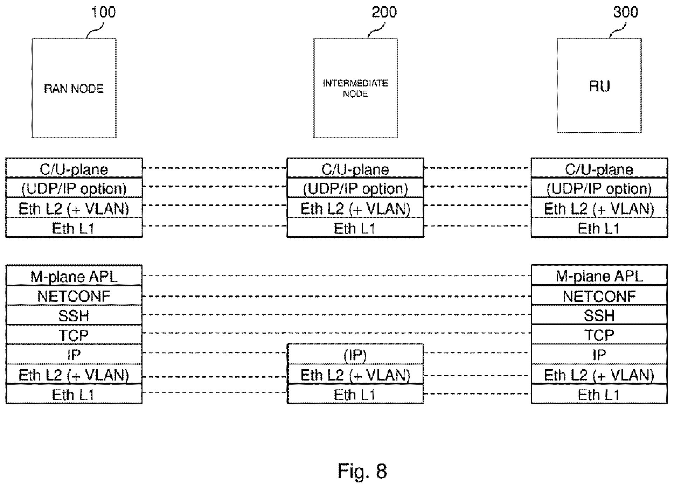

Fig. 8 illustrates an example of a protocol stack for communication of the M-plane and the C/U-plane between the RAN node 100 and the RU 300 via the intermediate node 200. In the C/U-plane, Ethernet (registered trademark) is used. As an option, the User Datagram Protocol (UDP) and the Internet Protocol (IP) may also be used. The intermediate node 200 performs duplication processing of a downlink signal (downlink traffic), and combining processing of uplink signals (uplink traffic) as processing of the C/U-plane. In the M-plane, the Network Configuration Protocol (NETCONF) is used. For the M-plane, the intermediate node 200 performs IP routing, or operates as an Ethernet switch.

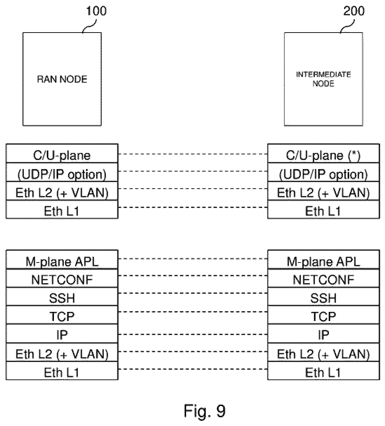

Fig. 9 illustrates an example of a protocol stack for communication of the M-plane and the C/U-plane between the RAN node 100 and the intermediate node 200. The protocol stack regarding the C/U-plane is used when the intermediate node 200 also operates as an RU (in other words, in a case of a cascade configuration). In the M-plane, NETCONF is used.

Note that, when NETCONF is used, the RAN node 100 is a NETCONF client, and the intermediate node 200 and the RU 300 are each a NETCONF server. The description herein takes an example in which NETCONF is used as a protocol used for a configuration of a network; however, the first example embodiment is not limited to this example. For example, another protocol (for example, RESTCONF or the like) may be used as a protocol used for a configuration of a network.

### - Flow

For communication of the C/U-plane between the RAN node 100 and the RU 300, for example, connection between the RAN node 100 and the intermediate node 200 is established, and connection between the intermediate node 200 and the RU 300 is established. In other words, a flow (higher flow) between the RAN node 100 and the intermediate node 200 is configured, and a flow (lower flow) between the intermediate node 200 and the RU 300 is configured. Each of the flows may be referred to as a transport flow, an interface, a link, a connection, or the like. Note that, instead of the configuration in which the flows between neighboring nodes are configured, a flow between the RAN node 100 and each node (the intermediate node 200 or the RU 300) may be configured as will be described later as a first example alteration.

For example, the flow is configured in a data model of the M-plane in the RU 300 or the intermediate node 200. For example, the data model is o-ran-processing-element.yang (in particular, transport-flow).

### -- First Example

As a first example, the flow is configured as ETH-INTERFACE (or eth-flow). ETH-INTERFACE (or eth-flow) includes two MAC addresses and a VLAN ID. For example, the flow between the RAN node 100 and the intermediate node 200 is configured as a MAC address of the RAN node 100, and a MAC address and a VLAN ID of the intermediate node 200. For example, the flow between the intermediate node 200 and the RU 300 is configured as a MAC address of the intermediate node 200, and a MAC address and a VLAN ID of the RU 300.

### -- Second Example

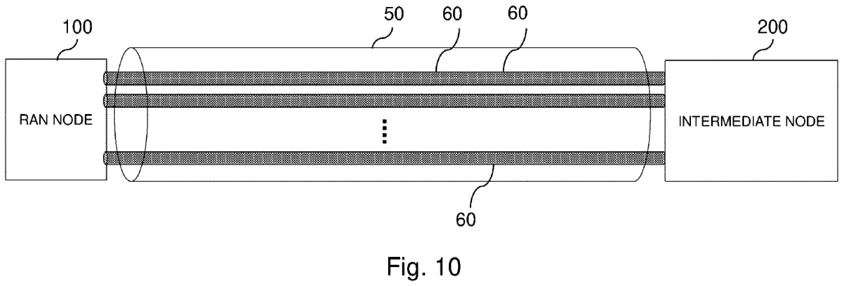

As a second example, the flow may be ALIASMAC-INTERFACE (or aliasmac-flow), and may include a MAC address, an Alias MAC address, and a VLAN ID. As illustrated in the example of Fig. 10, a flow 50 is configured as ETH-INTERFACE (or eth-flow), and includes a physical MAC address, whereas each of flows 60 is configured as ALIASMAC-INTERFACE (or aliasmac-flow), and includes an Alias MAC address. Thus, even if there is only one physical MAC address, there are a plurality of Alias MAC addresses, and a plurality of flows 60 may be configured.

### -- Third Example

As a third example, the flow may be UDPIP-INTERFACE (or udpip-flow), and include two sets each including an IP address and a UDP port number. The flow between the RAN node 100 and the intermediate node 200 may be configured as a set of an IP address and a UDP port number of the RAN node 100, and a set of an IP address and a UDP port number of the intermediate node 200. The flow between the intermediate node 200 and the RU 300 may be configured as a set of an IP address and a UDP port number of the intermediate node 200, and a set of an IP address and a UDP port number of the RU 300.

Note that the following will describe an example in which the flow is configured as ETH-INTERFACE; however, as a matter of course, ETH-INTERFACE in these descriptions may be replaced by ALIASMAC-INTERFACE or UDPIP-INTERFACE.

### (3) Specific Examples of System

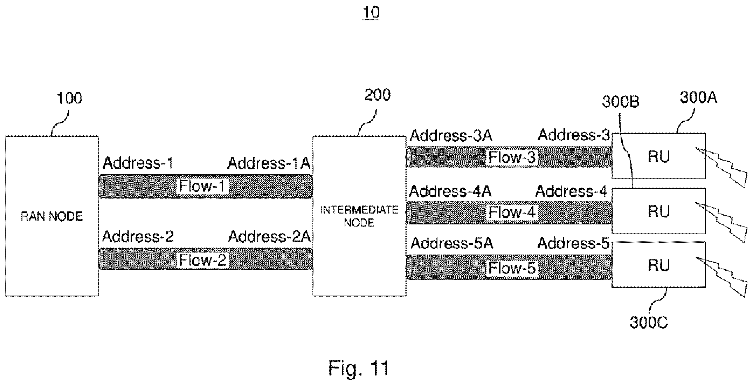

With reference to Fig. 11 to Fig. 14, various specific examples of the system 10 will be described. Note that, as a matter of course, the system 10 is not limited to these examples.

### - First Specific Example

Fig. 11 illustrates a first specific example of the system 10 according to the first example embodiment. With reference to Fig. 11, the system 10 includes a RAN node 100, an intermediate node 200, and three RUs 300 (RUs 300A, 300B, and 300C). In the first specific example, the intermediate node 200 is an FHM

The RAN node 100 communicates with one or more user equipments via the three RUs 300. The intermediate node 200 transmits a signal between the RAN node 100 and the three RUs 300. In other words, the intermediate node 200 performs duplication processing of a downlink signal (downlink traffic), and combining processing of uplink signals (uplink traffic).

In the first specific example, two flows (Flow-1 and Flow-2) are configured between the RAN node 100 and the intermediate node 200. Flow-1 includes Address-1 of the RAN node 100 and Address-1A of the intermediate node 200. Flow-2 includes Address-2 of the RAN node 100 and Address-2A of the intermediate node 200.

In the first specific example, three flows (Flow-3, Flow-4, and Flow-5) are configured between the intermediate node 200 and the three RUs 300 (RUs 300A, 300B, and 300C). Flow-3 includes Address-3A of the intermediate node 200 and Address-3 of the RU 300A. Flow-4 includes Address-4A of the intermediate node 200 and Address-4 of the RU 300B. Flow-5 includes Address-5A of the intermediate node 200 and Address-5 of the RU 300C.

### - Second Specific Example

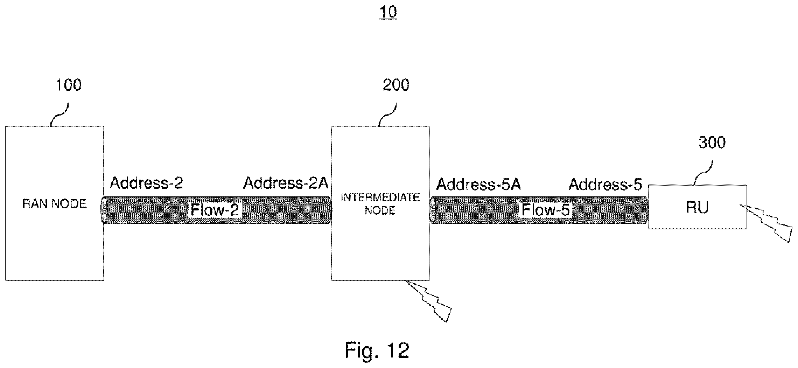

Fig. 12 illustrates a second specific example of the system 10 according to the first example embodiment. With reference to Fig. 12, the system 10 includes a RAN node 100, an intermediate node 200, and an RU 300. The second specific example is an example of a cascade configuration, and the intermediate node 200 is a cascaded RU (for example, a cascaded O-RU) that also operates as an RU.

The RAN node 100 communicates with one or more user equipments via the intermediate node 200 (cascaded RU) and the RU 300. The intermediate node 200 transmits a signal between the RAN node 100 and the RU 300. In other words, the intermediate node 200 performs duplication processing of a downlink signal (downlink traffic), and combining processing of uplink signals (uplink traffic).

In the second specific example, one flow (Flow-2) is configured between the RAN node 100 and the intermediate node 200. Flow-2 includes Address-2 of the RAN node 100 and Address-2A of the intermediate node 200.

In the second specific example, one flow (Flow-5) is configured between the intermediate node 200 and the RU 300. Flow-5 includes Address-5A of the intermediate node 200 and Address-5 of the RU 300.

### - Third Specific Example

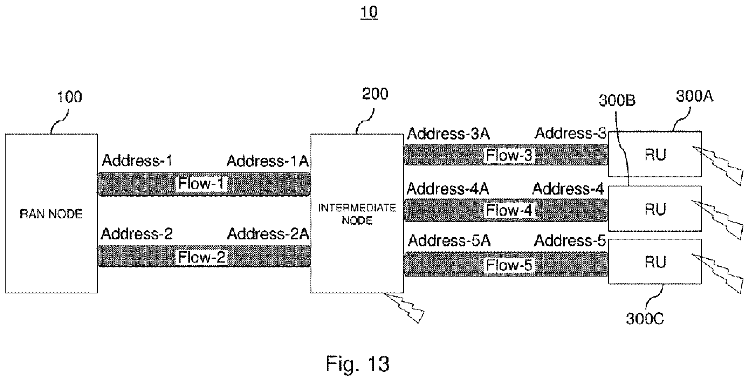

Fig. 13 illustrates a third specific example of the system 10 according to the first example embodiment. With reference to Fig. 13, similarly to the first specific example, the system 10 includes a RAN node 100, an intermediate node 200, and three RUs 300 (RUs 300A, 300B, and 300C). In addition, similarly to the second specific example, the intermediate node 200 also operates as an RU. In other words, the third specific example is an example of a combination of the first specific example (FHM) and the second specific example (cascade configuration).

The RAN node 100 communicates with one or more user equipments via four RUs (the intermediate node 200 and the three RUs 300). The intermediate node 200 transmits a signal between the RAN node 100 and the three RUs 300. In other words, the intermediate node 200 performs duplication processing of a downlink signal (downlink traffic), and combining processing of uplink signals (uplink traffic).

Description regarding the flows is similar to that of the first specific example. Thus, overlapping description will be omitted.

### - Fourth Specific Example

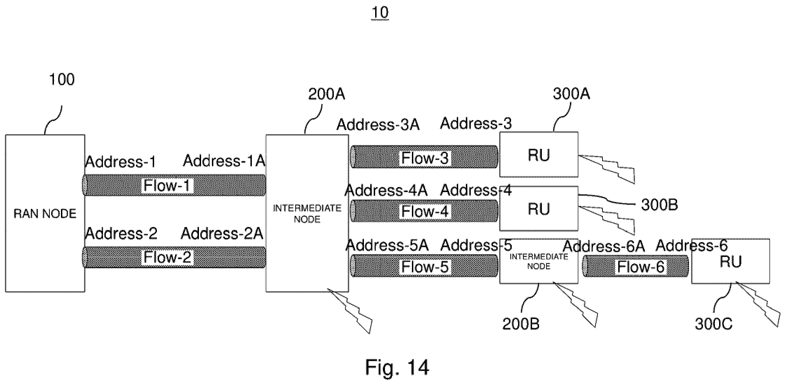

Fig. 14 illustrates a fourth specific example of the system 10 according to the first example embodiment. With reference to Fig. 14, the system 10 includes a RAN node 100, two intermediate nodes 200 (intermediate nodes 200A and 200B), and three

RUs 300 (RUs 300A, 300B, and 300C). In other words, the fourth specific example further includes one RU in addition to the cascade configuration of the third specific example.

The RAN node 100 communicates with one or more user equipments via five RUs (the two intermediate nodes 200 and the three RUs 300). The intermediate node 200A transmits a signal between the RAN node 100 and each of the RUs 300A and 300B and the intermediate node 200B. The intermediate node 200B transmits a signal between the intermediate node 200A and the RU 300C. In other words, the two intermediate nodes 200 perform duplication processing of a downlink signal (downlink traffic), and combining processing of uplink signals (uplink traffic).

In the fourth specific example, two flows (Flow-1 and Flow-2) are configured between the RAN node 100 and the intermediate node 200A. This configuration is similar to that of the first specific example and the third specific example.

In the fourth specific example, two flows (Flow-3 and Flow-4) are configured between the intermediate node 200A and the two RUs 300 (RUs 300A and 300B), and one flow (Flow-5) is configured between the intermediate node 200A and the intermediate node 200B. In particular, Flow-5 includes Address-5A of the intermediate node 200A and Address-5 of the intermediate node 200B.

In addition, in the fourth specific example, one flow (Flow-6) is configured between the intermediate node 200B and the RU 300C. Flow-6 includes Address-6A of the intermediate node 200B and Address-6 of the RU 300C.

In the above, specific examples of the system 10 are described. Each address used herein is, for example, a MAC address. Note that, as described above, each address may be an Alias MAC address, or may be a set of an IP address and a UDP port number.

### <2.2. Configuration of RAN Node>

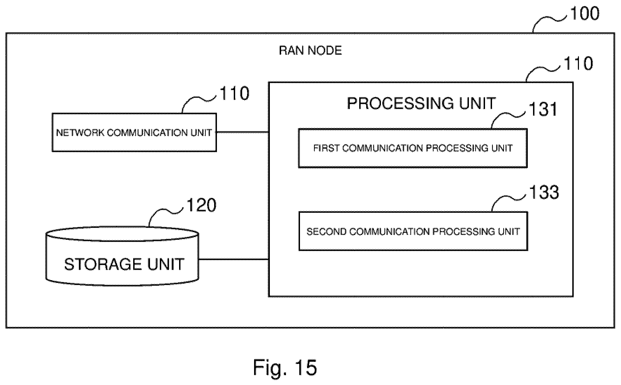

Fig. 15 illustrates an example of a schematic configuration of the RAN node 100 according to the first example embodiment. With reference to Fig. 15, the RAN node 100 includes a network communication unit 110, a storage unit 120, and a processing unit 130.

### (1) Network Communication Unit 110

The network communication unit 110 transmits a signal to the intermediate node 200, and receives a signal from the intermediate node 200.

In addition, the network communication unit 110 may transmit a signal to the CU, and receive a signal from the CU.

### (2) Storage Unit 120

The storage unit 120 temporarily or permanently stores a program (instructions) and parameters for operations of the RAN node 100 as well as various pieces of data. The program includes one or more instructions for operation of the RAN node 100.

### (3) Processing Unit 130

The processing unit 130 provides various functions of the RAN node 100. The processing unit 130 includes a first communication processing unit 131 and a second communication processing unit 133. Note that the processing unit 130 may further include constituent elements other than these constituent elements. In other words, the processing unit 130 may also perform operations other than the operations of these constituent elements.

The first communication processing unit 131 performs processing of the M-plane. The second communication processing unit 133 performs processing of the C/U-plane.

For example, the processing unit 130 (the first communication processing unit 131 and the second communication processing unit 133) communicate with another node (for example, the intermediate node 200 or the RU 300) via the network communication unit 110.

### (4) Implementation Example

The network communication unit 110 may be implemented with a network interface (for example, a network adapter, a network interface card, or the like) of Ethernet (registered trademark) or the like. The storage unit 120 may be implemented with a memory (e.g., a nonvolatile memory and/or a volatile memory) and/or a hard disk, and the like. The processing unit 130 may be implemented with one or more processors. The first communication processing unit 131 and the second communication processing unit 133 may be implemented with the same processor or may be implemented with separate processors. The memory (storage unit 120) may be included in the one or more processors or may be provided outside the one or more processors.

The RAN node 100 may include a memory configured to store a program (instructions) and one or more processors that can execute the program (instructions). The one or more processors may execute the program and thereby perform operations of the processing unit 130 (operations of the first communication processing unit 131 and the second communication processing unit 133). The program may be a program for causing the processor(s) to execute the operations of the processing unit 130 (the operations of the first communication processing unit 131 and the second communication processing unit 133).

Note that the RAN node 100 may be virtual. In other words, the RAN node 100 may be implemented as a virtual machine. In this case, the RAN node 100 (the virtual machine) may operate as a physical machine (hardware) including a processor, a memory, and the like, and a virtual machine on a hypervisor.

### <2.3. Configuration of Intermediate Node>

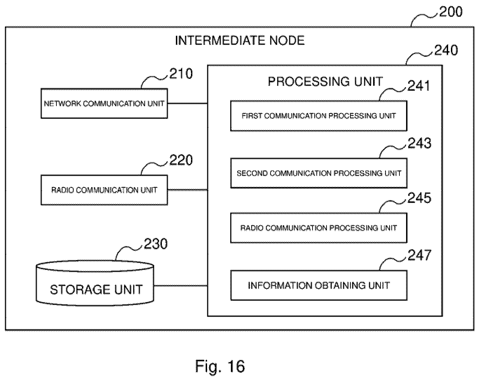

Fig. 16 illustrates an example of a schematic configuration of the intermediate node 200 according to the first example embodiment. With reference to Fig. 16, the intermediate node 200 includes a network communication unit 210, a radio communication unit 220, a storage unit 230, and a processing unit 240.

### (1) Network Communication Unit 210

The network communication unit 210 transmits a signal to the RAN node 100, the RU 300, or another intermediate node 200, and receives a signal from the RAN node 100, the RU 300, or another intermediate node 200.

### (2) Radio Communication Unit 220

The radio communication unit 220 performs radio frequency (RF) processing, and transmits and receives a signal by radio. For example, the radio communication unit 220 receives a signal from the UE, and transmits a signal to the UE.

### (3) Storage Unit 230

The storage unit 230 temporarily or permanently stores a program (instructions) and parameters for operations of the intermediate node 200 as well as various pieces of data. The program includes one or more instructions for operation of the intermediate node 200.

### (4) Processing Unit 240

The processing unit 240 provides various functions of the intermediate node 200. The processing unit 240 includes a first communication processing unit 241, a second communication processing unit 243, a radio communication processing unit 245, and an information obtaining unit 247. Note that the processing unit 240 may further include constituent elements other than these constituent elements. In other words, the processing unit 240 may also perform operations other than the operations of these constituent elements.

The first communication processing unit 241 performs processing of the M-plane. The second communication processing unit 243 performs processing of the C/U-plane.

The radio communication processing unit 245 performs, for example, processing of a lower physical (Low PHY) layer.

The information obtaining unit 247 obtains management information as will be described later.

For example, the processing unit 240 (the first communication processing unit 241 and the second communication processing unit 243) communicates with another node (for example, the RAN node 100, the RU 300, or another intermediate node 200) via the network communication unit 210. The processing unit 240 (radio communication processing unit 245) communicates with the UE via the radio communication unit 220.

### (5) Implementation Example

The network communication unit 210 may be implemented with a network interface (for example, a network adapter, a network interface card, or the like) of Ethernet (registered trademark) or the like. The radio communication unit 220 may be implemented with an antenna, an RF circuit, and the like, and the antenna may be a directional antenna. The storage unit 230 may be implemented with a memory (e.g., a nonvolatile memory and/or a volatile memory) and/or a hard disk, and the like. The processing unit 240 may be implemented with one or more processors. The first communication processing unit 241, the second communication processing unit 243, the radio communication processing unit 245, and the information obtaining unit 247 may be implemented with the same processor or may be implemented with separate processors. The memory (storage unit 230) may be included in the one or more processors or may be provided outside the one or more processors.

The intermediate node 200 may include a memory configured to store a program (instructions) and one or more processors that can execute the program (instructions). The one or more processors may execute the program and thereby perform operations of the processing unit 240 (operations of the first communication processing unit 241, the second communication processing unit 243, the radio communication processing unit 245, and the information obtaining unit 247). The program may be a program for causing the processor(s) to execute the operations of the processing unit 240 (the operations of the first communication processing unit 241, the second communication processing unit 243, the radio communication processing unit 245, and the information obtaining unit 247).

Note that the above describes an example in which the intermediate node 200 includes the radio communication unit 220 and the radio communication processing unit 245. However, when the intermediate node 200 does not operate as an RU, the intermediate node 200 need not include the radio communication unit 220 and the radio communication processing unit 245.

### <2.4. Configuration of RU>

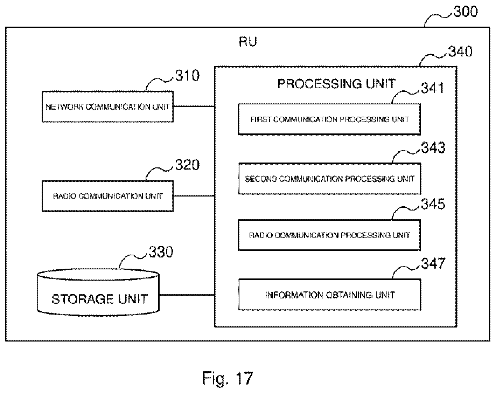

Fig. 17 illustrates an example of a schematic configuration of the RU 300 according to the first example embodiment. With reference to Fig. 17, the RU 300 includes a network communication unit 310, a radio communication unit 320, a storage unit 330, and a processing unit 340.

### (1) Network Communication Unit 310

The network communication unit 310 transmits a signal to the intermediate node 200, and receives a signal from the intermediate node 200.

### (2) Radio Communication Unit 320

The radio communication unit 320 performs radio frequency (RF) processing, and transmits and receives a signal by radio. For example, the radio communication unit 320 receives a signal from the UE, and transmits a signal to the UE.

### (3) Storage Unit 330

The storage unit 330 temporarily or permanently stores a program (instructions) and parameters for operations of the RU 300 as well as various pieces of data. The program includes one or more instructions for operation of the RU 300.

### (4) Processing Unit 340

The processing unit 340 provides various functions of the RU 300. The processing unit 340 includes a first communication processing unit 341, a second communication processing unit 343, a radio communication processing unit 345, and an information obtaining unit 347. Note that the processing unit 340 may further include constituent elements other than these constituent elements. In other words, the processing unit 340 may also perform operations other than the operations of these constituent elements.

The first communication processing unit 341 performs processing of the M-plane. The second communication processing unit 343 performs processing of the C/U-plane.

The radio communication processing unit 345 performs, for example, processing of a lower physical (Low PHY) layer.

The information obtaining unit 347 obtains management information as will be described later.

For example, the processing unit 340 (the first communication processing unit 341 and the second communication processing unit 343) communicates with another node (for example, the RAN node 100 or the intermediate node 200) via the network communication unit 310. The processing unit 340 (radio communication processing unit 345) communicates with the UE via the radio communication unit 320.

### (5) Implementation Example

The network communication unit 310 may be implemented with a network interface (for example, a network adapter, a network interface card, or the like) of Ethernet (registered trademark) or the like. The radio communication unit 320 may be implemented with an antenna, an RF circuit, and the like, and the antenna may be a directional antenna. The storage unit 330 may be implemented with a memory (e.g., a nonvolatile memory and/or a volatile memory) and/or a hard disk, and the like. The processing unit 340 may be implemented with one or more processors. The first communication processing unit 341, the second communication processing unit 343, the radio communication processing unit 345, and the information obtaining unit 347 may be implemented with the same processor or may be implemented with separate processors. The memory (storage unit 330) may be included in the one or more processors or may be provided outside the one or more processors.

The RU 300 may include a memory configured to store a program (instructions) and one or more processors that can execute the program (instructions). The one or more processors may execute the program and thereby perform operations of the processing unit 340 (operations of the first communication processing unit 341, the second communication processing unit 343, the radio communication processing unit 345, and the information obtaining unit 347). The program may be a program for causing the processor(s) to execute the operations of the processing unit 340 (the operations of the first communication processing unit 341, the second communication processing unit 343, the radio communication processing unit 345, and the information obtaining unit 347).

### <2.5. Technical Features>

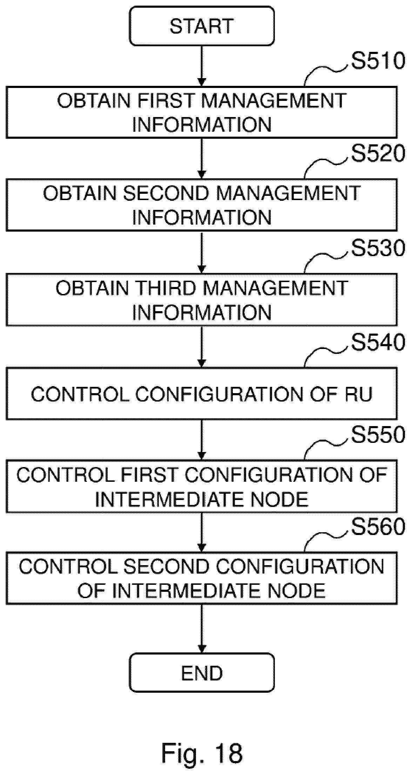

With reference to Fig. 18 to Fig. 25, technical features according to the first example embodiment will be described.

Fig. 18 is a flowchart for describing an example of a schematic procedure of processing of the RAN node 100 according to the first example embodiment. Generally described, first, the RAN node 100 obtains first management information, second management information, and third management information (S510, S520, and S530). Subsequently, the RAN node 100 controls a configuration of the RU 300 (S540), and also controls a configuration of the intermediate node 200 (S550 and S560).

In the following, the technical features according to the first example embodiment will be described in accordance with the procedure of the processing illustrated in Fig. 18.

### (1) Step 510: Obtaining of First Management Information

The RU 300 (information obtaining unit 347) obtains the first management information indicating an address of the RU 300, which is used by the RU 300 to connect to the intermediate node 200 for communication of the C/U-plane. Then, the RU 300 (first communication processing unit 341) transmits the first management information to the RAN node 100.

The RAN node 100 (first communication processing unit 131) receives the first management information from the RU 300. In this manner, the RAN node 100 obtains the first management information indicating the address of the RU 300.

For example, the address of the RU 300 is a MAC address of the RU 300. Alternatively, the address of the RU 300 may be an Alias MAC address of the RU 300, or may be an IP address and a UDP port number of the RU 300.

Fig. 11 is referred to again. In this specific example, the RU 300A transmits the first management information indicating Address-3 of the RU 300A to the RAN node 100, the RU 300B transmits the first management information indicating Address-4 of the RU 300B to the RAN node 100, and the RU 300C transmits the first management information indicating Address-5 of the RU 300C to the RAN node 100. The RAN node 100 receives the first management information from each of the RUs 300A, 300B, and 300C. In this manner, the RAN node 100 obtains pieces of the first management information respectively indicating Address-3, Address-4, and Address-5.

Fig. 14 is referred to again. In this specific example, the RU 300A transmits the first management information indicating Address-3 of the RU 300A to the RAN node 100, the RU 300B transmits the first management information indicating Address-4 of the RU 300B to the RAN node 100, and the RU 300C transmits the first management information indicating Address-6 of the RU 300C to the RAN node 100. The RAN node 100 receives the first management information from each of the RUs 300A, 300B, and 300C. In this manner, the RAN node 100 obtains pieces of the first management information respectively indicating Address-3, Address-4, and Address-6.

For the sake of transmission and reception of the first management information, the protocol used for the configuration of the network is used by the RAN node 100 (client of the protocol) and the RU 300 (server of the protocol). For example, the protocol is NETCONF, the client is a NETCONF client, and the server is a NETCONF server. Note that the protocol may be another protocol (for example, RESTCONF or the like), instead of NETCONF.

### (2) Step 520: Obtaining of Second Management Information

The intermediate node 200 (information obtaining unit 247) obtains the second management information indicating an address of the intermediate node 200, which is used by the intermediate node 200 to connect to the RAN node 100 (or another intermediate node 200 located on the RAN node 100 side) for communication of the C/U-plane. Then, the intermediate node 200 (first communication processing unit 241) transmits the second management information to the RAN node 100.

The RAN node 100 (first communication processing unit 131) receives the second management information from the intermediate node 200. In this manner, the RAN node 100 obtains the second management information indicating the address of the intermediate node 200.

For example, the address of the intermediate node 200 is a MAC address of the intermediate node 200. Alternatively, the address of the intermediate node 200 may be an Alias MAC address of the intermediate node 200, or may be an IP address and a UDP port number of the intermediate node 200.

Fig. 11 is referred to again. In this specific example, the intermediate node 200 obtains the second management information indicating Address-1A and Address-2A of the intermediate node 200, and transmits the second management information to the RAN node 100. The RAN node 100 receives the second management information. In this manner, the RAN node 100 obtains the second management information indicating Address-1A and Address-2A.

Fig. 14 is referred to again. In this specific example, the intermediate node 200A obtains the second management information indicating Address-1A and Address-2A of the intermediate node 200A, and transmits the second management information to the RAN node 100. The intermediate node 200B obtains the second management information indicating Address-5 of the intermediate node 200B, and transmits the second management information to the RAN node 100. The RAN node 100 receives the second management information from each of the intermediate node 200A and the intermediate node 200B. In this manner, the RAN node 100 obtains the second management information indicating Address-1A and Address-2A, and the second management information indicating Address-5.

For the sake of transmission and reception of the second management information, the protocol used for the configuration of the network is used by the RAN node 100 (the protocol client) and the intermediate node 200 (the protocol server). For example, the protocol is NETCONF, the client is a NETCONF client, and the server is a NETCONF server. Note that the protocol may be another protocol (for example, RESTCONF or the like), instead of NETCONF.

Through obtaining of the third management information as described above, implementation of communication of the C/U-plane via the intermediate node 200 is further facilitated.

### (3) Step 530: Obtaining of Third Management Information

The intermediate node 200 (information obtaining unit 247) obtains third management information indicating correspondence relationship between the address of the intermediate node 200, which is used by the intermediate node 200 to connect to the RU 300 for communication of the C/U-plane, and the address of the RU 300, which is used by the RU 300 to connect to the intermediate node 200 for communication of the C/U-plane. Then, the intermediate node 200 (first communication processing unit 241) transmits the third management information to the RAN node 100.

### - Third Management Information

For example, the third management information includes the address of the intermediate node 200 and the address of the RU 300.

### - Address

For example, the address of the intermediate node 200 is a MAC address of the intermediate node 200, and the address of the RU 300 is a MAC address of the RU 300.

Alternatively, the address of the intermediate node 200 may be an Alias MAC address of the intermediate node 200, and the address of the RU 300 may be an Alias MAC address of the RU 300.

Alternatively, the address of the intermediate node 200 may be an IP address and a UDP port number of the intermediate node 200, and the address of the RU 300 may be an IP address and a UDP port number of the RU 300.

### - Specific Examples

Fig. 11 is referred to again. In this specific example, the intermediate node 200 obtains the third management indicating correspondence relationship between Address-3A of the intermediate node 200 and Address-3 of the RU 300A, correspondence relationship between Address-4A of the intermediate node 200 and Address-4 of the RU 300B, and correspondence relationship between Address-5A of the intermediate node 200 and Address-5 of the RU 300C. Then, the intermediate node 200 transmits the third management information to the RAN node 100. The RAN node 100 receives the third management information. In this manner, the RAN node 100 obtains pieces of the third management information indicating respective correspondence relationships.

Fig. 14 is referred to again. In this specific example, the intermediate node 200A obtains the third management indicating correspondence relationship between Address-3A of the intermediate node 200A and Address-3 of the RU 300A, correspondence relationship between Address-4A of the intermediate node 200A and Address-4 of the RU 300B, and correspondence relationship between Address-5A of the intermediate node 200A and Address-5 of the intermediate node 200B. Then, the intermediate node 200A transmits the third management information to the RAN node 100. The intermediate node 200B obtains correspondence relationship between Address-6A of the intermediate node 200B and Address-6 of the RU 300C. Then, the intermediate node 200B transmits the third management information to the RAN node 100. The RAN node 100 receives the third management information from each of the intermediate nodes 200A and 200B. In this manner, the RAN node 100 obtains pieces of the third management information indicating respective correspondence relationships.

### - Obtaining Method

For example, the address is a MAC address, and the second management information is neighboring interface information obtained from physical port connection information. In this case, the intermediate node 200 (information obtaining unit 247) obtains the neighboring interface information with Loopback Request, Response of Ethernet Operations, Administration, Maintenance (OAM).

Alternatively, the address may be an IP address and a UDP port number, and in this case, the intermediate node 200 (information obtaining unit 247) may obtain the second management information with the Dynamic Host Configuration Protocol (DHCP) process and/or the Address Resolution Protocol (ARP).

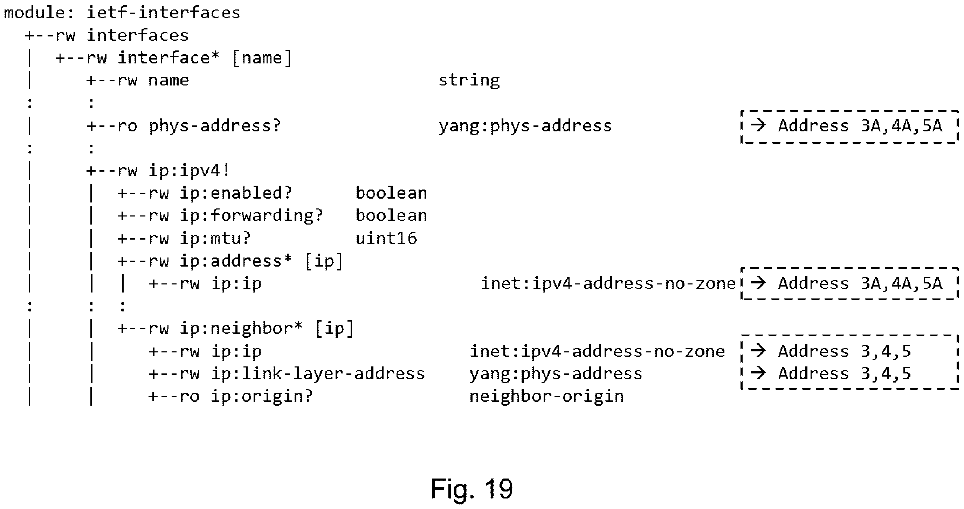

As an alternative method, as illustrated in Fig. 19, an interface for the RU 300 of the intermediate node 200 may be configured as ietf-interface, ietf-ip. In this case, the addresses (Address-3, Address-4, and Address-5) of the RU 300 corresponding to the addresses (Address-3A, Address-4A, and Address-5A) of the intermediate node 200 may be included in neighbour. The intermediate node 200 (information obtaining unit 247) may obtain such information as the third management information.

### - Transmission Method

For example, the intermediate node 200 (first communication processing unit 241) transmits the third management information to the RAN node 100 by using the protocol that is used for the configuration of the network, and the RAN node 100 (first communication processing unit 131) receives the third management information from the intermediate node 200 by using the protocol. The intermediate node 200 (first communication processing unit 241) is a server for the protocol, and the RAN node 100 (first communication processing unit 131) is a client of the protocol. For example, the protocol is NETCONF, the client is a NETCONF client, and the server is a NETCONF server. Note that the protocol may be another protocol (for example, RESTCONF or the like), instead of NETCONF.

Through obtaining of the third management information as described above, implementation of communication of the C/U-plane via the intermediate node 200 is further facilitated.

### (4) Step 540: Control of Configuration of RU 300

The RAN node 100 (first communication processing unit 131) controls the configuration of the RU 300, based on the first management information and the second management information.

### - Flow Configuration

The configuration of the RU 300 is a configuration of a flow between the intermediate node 200 and the RU 300.

For example, the configuration of the flow includes the address of the RU 300 corresponding to the flow (the address of the RU 300 used by the RU 300 to connect to the intermediate node 200 for communication of the C/U-plane) and the address of the intermediate node 200 corresponding to the flow (the address of the intermediate node 200 used by the intermediate node 200 to connect to the RU 300 for communication of the C/U-plane). In addition, the configuration of the flow further includes a virtual local area network (VLAN) ID.

### - Control

For example, the RAN node 100 (first communication processing unit 131) determines the configuration of the RU 300, and transmits configuration information indicating the configuration of the RU 300 to the RU 300. The RU 300 (first communication processing unit 341) receives the configuration information from the RAN node 100, and configures the configuration for the RU 300.

For the sake of such control, the protocol used for the configuration of the network is used by the RAN node 100 (client of the protocol) and the RU 300 (server of the protocol). For example, the protocol is NETCONF, the client is a NETCONF client, and the server is a NETCONF server. Note that the protocol may be another protocol (for example, RESTCONF or the like), instead of NETCONF.

### - Specific Examples

Fig. 11 is referred to again. In this specific example, the RAN node 100 determines a configuration of Flow-3 (configuration of the RU 300A) including Address-3A, Address-3, and a VLAN ID. Then, the RAN node 100 transmits configuration information indicating the configuration to the RU 300A. Then, the RU 300A configures the configuration for the RU 300A. As a result, Flow-3 is configured.

The RAN node 100 determines a configuration of Flow-4 (configuration of the RU 300B) including Address-4A, Address-4, and a VLAN ID. Then, the RAN node 100 transmits configuration information indicating the configuration to the RU 300B. Then, the RU 300B configures the configuration for the RU 300B. As a result, Flow-4 is configured.

The RAN node 100 determines a configuration of Flow-5 (configuration of the RU 300C) including Address-5A, Address-5, and a VLAN ID. Then, the RAN node 100 transmits configuration information indicating the configuration to the RU 300C. Then, the RU 300C configures the configuration for the RU 300C. As a result, Flow-5 is configured.

Note that operation regarding a specific example of Fig. 14 is the same as the above-described operation regarding the specific example of Fig. 11 except that Flow-6 is configured instead of Flow-5.

### (5) Step 550: Control of First Configuration of Intermediate Node 200

The RAN node 100 (first communication processing unit 131) controls the first configuration of the intermediate node 200, based on the second management information.

### - Flow Configuration

The first configuration of the intermediate node 200 is a configuration of a flow between the RAN node 100 (or another intermediate node 200 located on the RAN node 100 side) and the intermediate node 200.

For example, the configuration of the flow includes the address of the RAN node 100 (or another intermediate node 200), which is used by the RAN node 100 (or another intermediate node 200) to connect to the intermediate node 200 for communication of the C/U-plane, and the address of the intermediate node 200, which is used by the intermediate node 200 to connect to the RAN node 100 (or another intermediate node 200) for communication of the C/U-plane. In addition, the configuration of the flow further includes a virtual local area network (VLAN) ID.

### - Control

For example, the RAN node 100 (first communication processing unit 131) determines the first configuration of the intermediate node 200, and transmits configuration information indicating the first configuration of the intermediate node 200 to the intermediate node 200. The intermediate node 200 (first communication processing unit 241) receives the configuration information from the RAN node 100, and configures the configuration for the intermediate node 200.

For the sake of such control, the protocol used for the configuration of the network is used by the RAN node 100 (client of the protocol) and the intermediate node 200 (server of the protocol). For example, the protocol is NETCONF, the client is a NETCONF client, and the server is a NETCONF server. Note that the protocol may be another protocol (for example, RESTCONF or the like), instead of NETCONF.

### - Specific Examples

Fig. 11 is referred to again. In this specific example, the RAN node 100 determines a configuration of Flow-1 (configuration of the intermediate node 200) including Address-1, Address-1A, and a VLAN ID, and a configuration of Flow-2 (configuration of the intermediate node 200) including Address-2, Address-2A, and a VLAN ID. Then, the RAN node 100 transmits configuration information indicating the configuration to the intermediate node 200. Then, the intermediate node 200 configures the configuration for the intermediate node 200. As a result, Flow-1 and Flow-2 are configured.

Note that operation regarding a specific example of Fig. 14 is the same as the above-described operation regarding the specific example of Fig. 11 except that Flow-5 is further configured.

### (6) Step 560: Configuration of Second Configuration of Intermediate Node 200

The RAN node 100 (first communication processing unit 131) controls the second configuration of the intermediate node 200, based on the second management information and the third management information.

### - Configuration of Correspondence relationship of Flows

The second configuration of the intermediate node 200 includes a configuration of correspondence relationship between a higher flow between the RAN node 100 (or another intermediate node 200 located on the RAN node 100 side) and the intermediate node 200 and a lower flow between the intermediate node 200 and the RU 300 (or another intermediate node 200 also operating as an RU).

For example, the configuration of the correspondence relationship includes the address of the RAN node (or another intermediate node 200) or the intermediate node 200 corresponding to the higher flow, and the address of the intermediate node 200 or the RU 300 (or another intermediate node 200 also operating as an RU) corresponding to the lower flow. Alternatively, the configuration of the correspondence relationship may include identification information of the higher flow and identification information of the lower flow.

For example, when the RAN node 100 communicates with one or more users via a plurality of RUs, the second configuration of the intermediate node 200 includes a configuration of correspondence relationship between each higher flow between the RAN node 100 (or the above-mentioned another intermediate node 200) and the intermediate node 200 and one or more lower flows between one or more corresponding RUs out of the plurality of RUs and the intermediate node 200. The one or more corresponding RUs form one shared cell.

For example, when the intermediate node 200 is one (in other words, a cascaded RU) of the plurality of RUs, the second configuration of the intermediate node 200 includes a configuration of correspondence relationship between the higher flow between the RAN node 100 (or the above-mentioned another intermediate node 200) and the intermediate node 200 and radio communication performed by the intermediate node 200 (RU). The radio communication corresponds to "radio" to be described later.

### - Control

For example, the RAN node 100 (first communication processing unit 131) determines the second configuration of the intermediate node 200, and transmits configuration information indicating the second configuration of the intermediate node 200 to the intermediate node 200. The intermediate node 200 (first communication processing unit 241) receives the configuration information from the RAN node 100, and configures the configuration for the intermediate node 200.

For the sake of such control, the protocol used for the configuration of the network is used by the RAN node 100 (client of the protocol) and the intermediate node 200 (server of the protocol).

### - Specific Examples

### -- First Specific Example

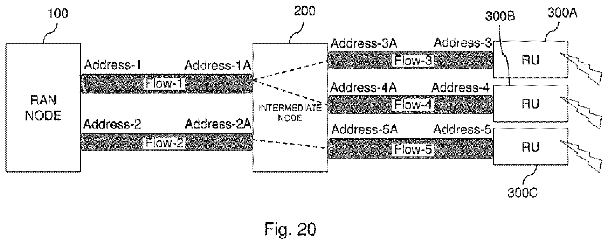

The first specific example of Fig. 20 (the same as the first specific example of Fig. 11) is referred to. In this specific example, the RAN node 100 determines a configuration of correspondence relationship between Flow-1 (higher flow) and Flow-3 and Flow-4 (lower flow). In addition, the RAN node 100 determines a configuration of correspondence relationship between Flow-2 (higher flow) and Flow-5 (lower flow).

In such a case, the configuration of the correspondence relationship is, for example, any one of the following first to fifth examples.
(First example) Address-1A - Address-3, Address-4
   Address-2A - Address-5
(Second example) Address-1 - Address-3A, Address-4A
   Address-2 - Address-5A
(Third example) Address-1A - Address-3A, Address-4A
   Address-2A - Address-5A
(Fourth example) Address-1 - Address-3, Address-4
   Address-2 - Address-5
(Fifth example) Flow-1 - Flow-3, Flow-4
   Flow-2 - Flow-5

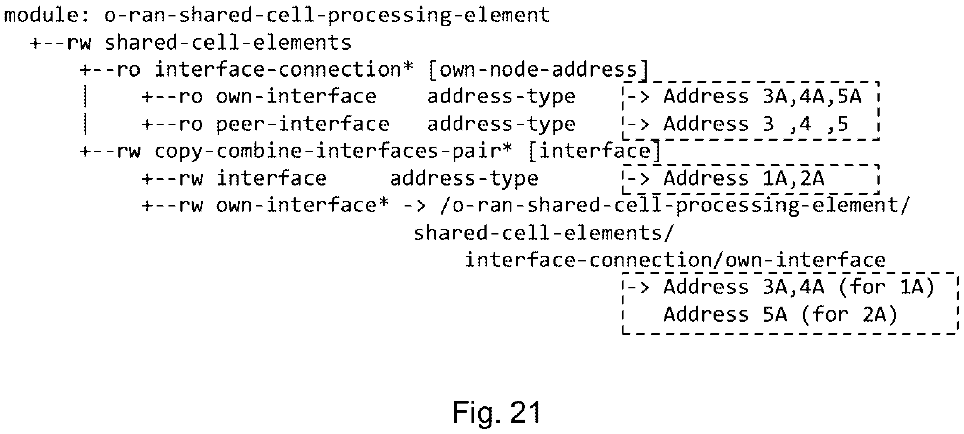

For example, Fig. 21 illustrates an example (YANG) of the second configuration (configuration of the correspondence relationship) of the intermediate node 200. Such a configuration is configured for the intermediate node 200. This example corresponds to the third example described above.

### -- Third Specific Example

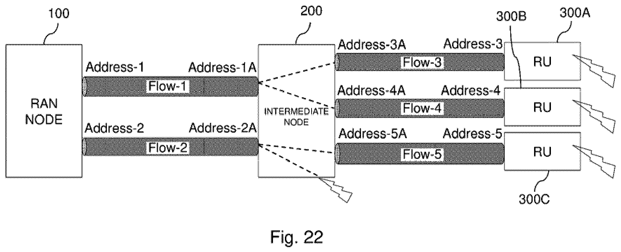

The third specific example of Fig. 22 (the same as the third specific example of Fig. 13) is referred to. In this specific example, the RAN node 100 determines a configuration of correspondence relationship between Flow-1 (higher flow) and Flow-3 and Flow-4 (lower flow). In addition, the RAN node 100 determines a configuration of correspondence relationship between Flow-2 (higher flow) and Flow-5 (lower flow) and radio. In other words, the difference between the third specific example of Fig. 22 and the first specific example of Fig. 20 is only the "radio". The "radio" means radio communication performed by the intermediate node 200 itself also being a RU.

In such a case, the configuration of the correspondence relationship is, for example, any one of the following first to fifth examples.
(First example) Address-1A - Address-3, Address-4
   Address-2A - Address-5, radio
(Second example) Address-1 - Address-3A, Address-4A
   Address-2 - Address-5A, radio
(Third example) Address-1A - Address-3A, Address-4A
   Address-2A - Address-5A, radio
(Fourth example) Address-1 - Address-3, Address-4
   Address-2 - Address-5, radio
(Fifth example) Flow-1 - Flow-3, Flow-4
   Flow-2 - Flow-5, radio

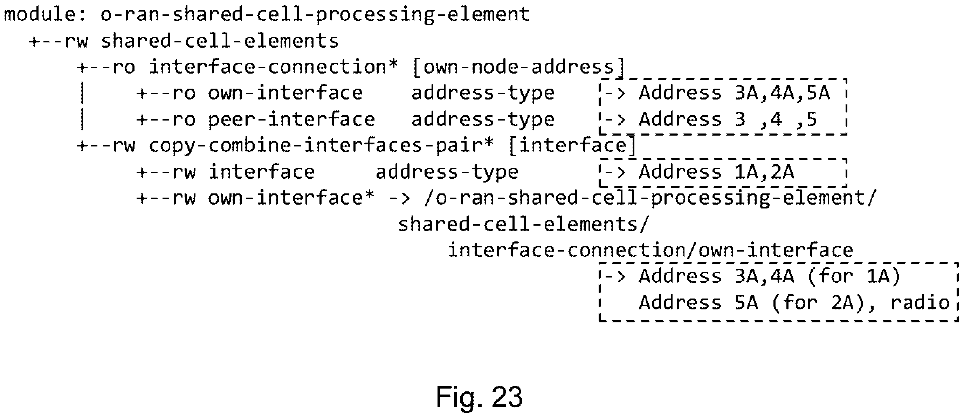

For example, Fig. 23 illustrates an example (YANG) of the second configuration (configuration of the correspondence relationship) of the intermediate node 200. Such a configuration is configured for the intermediate node 200. This example corresponds to the third example described above.

Note that, in the example of Fig. 23 (and Fig. 21), address-type is different depending on transport-flow configured for each RU. In a case of radio, a radio module such as uplane-conf.yang is specified. The RU (RUs 300A, 300B, and 300C) being a termination does not include o-ran-shared-cell-processing-element yang module or does not include list of interface-connection, and reception address and radio are specified for copy-combine-interfaces-pair.

Note that operation regarding the fourth specific example of Fig. 14 is the same as the above-described operation regarding the third specific example of Fig. 23 except that a configuration of correspondence relationship between Flow-5, and Flow-6 and radio is determined and configured.

### -- Second Specific Example

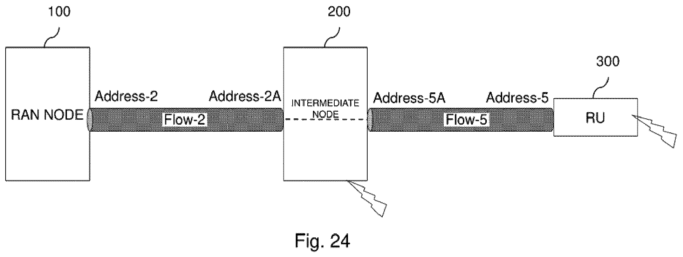

The second specific example of Fig. 24 (the same as the second specific example of Fig. 12) is referred to. In this specific example, the RAN node 100 determines a configuration of correspondence relationship between Flow-2 (higher flow) and Flow-5 (lower flow) and radio. The "radio" means radio communication performed by the intermediate node 200 itself also being a RU.

In such a case, the configuration of the correspondence relationship is, for example, any one of the following first to fifth examples.
(First example) Address-2A - Address-5, radio
(Second example) Address-2 - Address-5A, radio
(Third example) Address-2A - Address-5A, radio
(Fourth example) Address-2 - Address-5, radio
(Fifth example) Flow-2 - Flow-5, radio

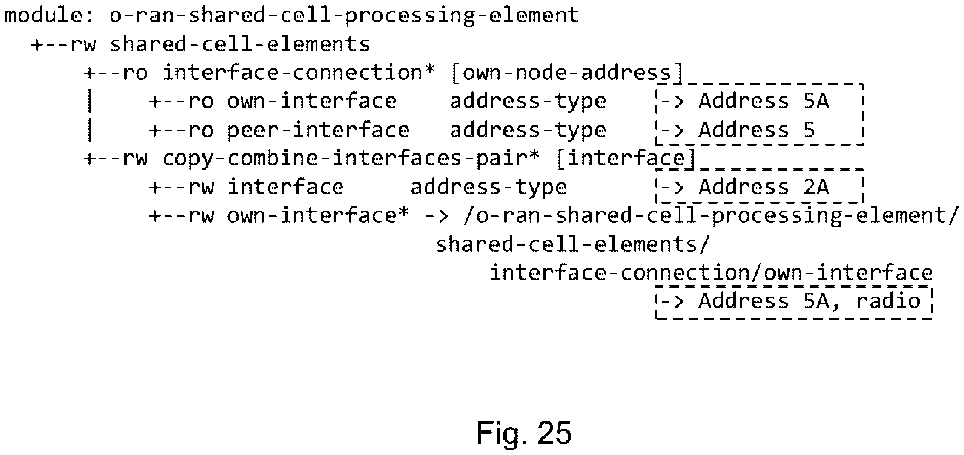

For example, Fig. 25 illustrates an example (YANG) of the second configuration (configuration of the correspondence relationship) of the intermediate node 200. Such a configuration is configured for the intermediate node 200. This example corresponds to the third example described above.

Note that, in the example of Fig. 25, address-type is different depending on transport-flow configured for each RU. In a case of radio, a radio module such as uplane-conf.yang is specified.

The RU (RU 300) being a termination does not include o-ran-shared-cell-processing-element yang module or does not include list of interface-connection, and reception address and radio are specified for copy-combine-interfaces-pair.

Through control of the second configuration of the intermediate node 200 as described above, implementation of communication of the C/U-plane via the intermediate node 200 can be implemented.

### <2.6. Example Alterations>

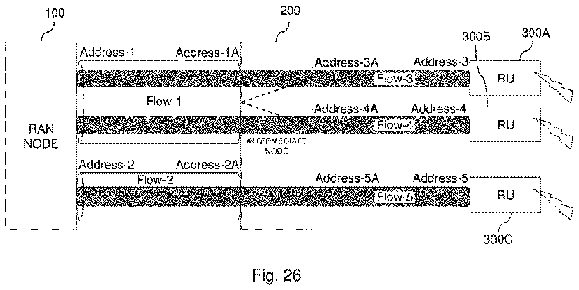

Next, with reference to Fig. 26 to Fig. 30, a first example alteration, a second example alteration, and a third example alteration of the first example embodiment will be described.

### (1) First Example Alteration

In the above-described example of the first example embodiment, flows between neighboring nodes are configured. For example, a flow between the RAN node 100 and the intermediate node 200 is configured as the higher flow, and a flow between the intermediate node 200 and the RU 300 is configured as the lower flow.

In contrast, in the second example alteration of the first example embodiment, a flow between the RAN node 100 and each node (the intermediate node 200 or the RU 300) is configured. For example, a flow between the RAN node 100 and the intermediate node 200 is configured as the higher flow, and a flow between the RAN node 100 and the RU 300 is configured as the lower flow, instead of a flow between the intermediate node 200 and the RU 300 being configured as the lower flow.

### - Specific Examples

### -- First Specific Example

Fig. 26 illustrates an example of flows of the first example alteration of a first specific example of the system 10 according to the first example embodiment.

Two flows (Flow-1 and Flow-2) are configured as the higher flow between the RAN node 100 and the intermediate node 200. Flow-1 includes Address-1 of the RAN node 100 and Address-1A of the intermediate node 200. Flow-2 includes Address-2 of the RAN node 100 and Address-2A of the intermediate node 200. This configuration is similar to that of the example described above with reference to Fig. 11.

In particular, in the first example alteration, three flows (Flow-3, Flow-4, and Flow-5) are configured as the lower flows between the RAN node 100 and three RUs 300 (RUs 300A, 300B, and 300C). Flow-3 includes Address-1 of the RAN node 100 and Address-3 of the RU 300A. Flow-4 includes Address-1 of the RAN node 100 and Address-4 of the RU 300B. Flow-5 includes Address-2 of the RAN node 100 and Address-5 of the RU 300C.

### -- Second Specific Example

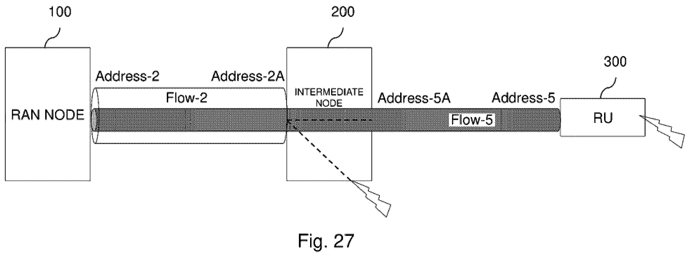

Fig. 27 illustrates an example of flows of the first example alteration of a second specific example of the system 10 according to the first example embodiment.

One flow (Flow-2) is configured between the RAN node 100 and the intermediate node 200. Flow-2 includes Address-2 of the RAN node 100 and Address-2A of the intermediate node 200. This configuration is similar to that of the example described above with reference to Fig. 12.

In particular, in the first example alteration, one flow (Flow-5) is configured between the RAN node 100 and the RU 300. Flow-5 includes Address-2 of the RAN node 100 and Address-5 of the RU 300.

### -- Third Specific Example

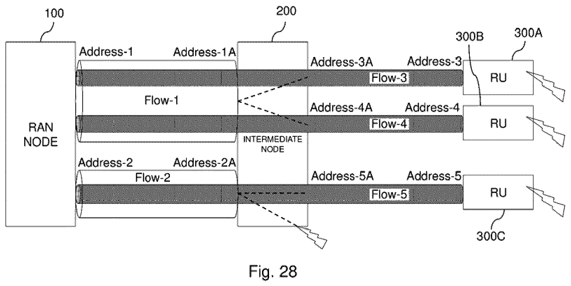

Fig. 28 illustrates an example of flows of the first example alteration of a third specific example of the system 10 according to the first example embodiment.

The flows of the third specific example are the same as the flows of the first specific example of Fig. 26. Thus, overlapping description will be omitted.

### -- Fourth Specific Example

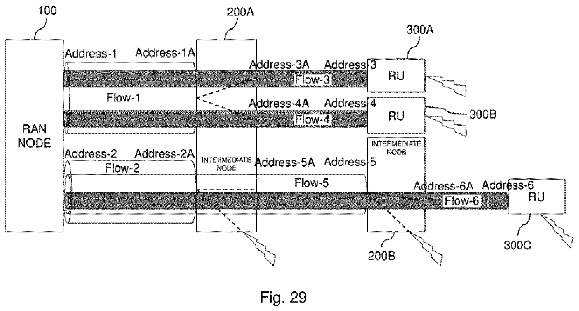

Fig. 29 illustrates an example of flows of the first example alteration of a fourth specific example of the system 10 according to the first example embodiment.

Two flows (Flow-1 and Flow-2) are configured between the RAN node 100 and the intermediate node 200A. This configuration is similar to that of the example described above with reference to Fig. 14.

In particular, in the first example alteration, one flow (Flow-5) is configured between the RAN node 100 and the intermediate node 200B. Flow-5 includes Address-2 of the RAN node 100 and Address-5 of the intermediate node 200B.

In addition, in particular, in the first example alteration, three flows (Flow-3, Flow-4, Flow-6) are configured between the RAN node 100 and three RUs 300 (RUs 300A, 300B, and 300C). Flow-3 includes Address-1 of the RAN node 100 and Address-3 of the RU 300A, Flow-4 includes Address-1 of the RAN node 100 and Address-4 of the RU 300B, and Flow-6 includes Address-2 of the RAN node 100 and Address-6 of the RU 300C.

### - Step 540: Control of Configuration of RU 300

As described above, the RAN node 100 (first communication processing unit 131) controls the configuration of the RU 300, based on the first management information and the second management information.

### -- Flow Configuration

In particular, in the first example alteration, the configuration of the RU 300 is a configuration of a flow between the RAN node 100 and the RU 300.

For example, the configuration of the flow includes the address of the RU 300 corresponding to the flow (the address of the RU 300 used by the RU 300 to connect to the intermediate node 200 for communication of the C/U-plane) and the address of the RAN node 100 corresponding to the flow (the address of the RAN node 100 used by the RAN node 100 to connect to the intermediate node 200 for communication of the C/U-plane). In addition, the configuration of the flow further includes a VLAN ID.

### -- Specific Examples

Fig. 26 is referred to again. In this specific example, the RAN node 100 determines a configuration of Flow-3 (configuration of the RU 300A) including Address-1, Address-3, and a VLAN ID. Then, the RAN node 100 transmits configuration information indicating the configuration to the RU 300A. Then, the RU 300A configures the configuration for the RU 300A. As a result, Flow-3 is configured.

The RAN node 100 determines a configuration of Flow-4 (configuration of the RU 300B) including Address-1, Address-4, and a VLAN ID. Then, the RAN node 100 transmits configuration information indicating the configuration to the RU 300B. Then, the RU 300B configures the configuration for the RU 300B. As a result, Flow-4 is configured.

The RAN node 100 determines a configuration of Flow-5 (configuration of the RU 300C) including Address-2, Address-5, and a VLAN ID. Then, the RAN node 100 transmits configuration information indicating the configuration to the RU 300C. Then, the RU 300C configures the configuration for the RU 300C. As a result, Flow-5 is configured.

Note that operation regarding the specific example of Fig. 29 is the same as the above-described operation regarding the specific example of Fig. 11 except that Flow-6 is configured instead of Flow-5.

### - Step 550: Control of First Configuration of Intermediate Node 200

As described above, the RAN node 100 (first communication processing unit 131) controls the first configuration of the intermediate node 200, based on the second management information.

### -- Flow Configuration

In particular, in the first example alteration, the first configuration of the intermediate node 200 is a configuration of a flow between the RAN node 100 and the intermediate node 200.

For example, the configuration of the flow includes the address of the RAN node 100 corresponding to the flow (the address of the RAN node 100 used by the RAN node 100 to connect to the intermediate node 200 for communication of the C/U-plane) and the address of the intermediate node 200 corresponding to the flow (the address of the intermediate node 200 used by the intermediate node 200 to connect to the RAN node 100 for communication of the C/U-plane). In addition, the configuration of the flow further includes a VLAN ID.

### -- Specific Examples

Fig. 26 is referred to again. In this specific example, the RAN node 100 determines a configuration of Flow-1 (configuration of the intermediate node 200) including Address-1, Address-1A, and a VLAN ID, and a configuration of Flow-2 (configuration of the intermediate node 200) including Address-2, Address-2A, and a VLAN ID. Then, the RAN node 100 transmits configuration information indicating the configuration to the intermediate node 200. Then, the intermediate node 200 configures the configuration for the intermediate node 200. As a result, Flow-1 and Flow-2 are configured.

Note that, in the specific example of Fig. 29, the RAN node 100 further determines a configuration of Flow-5 (configuration of the intermediate node 200B) including Address-2, Address-5, and a VLAN ID. Then, the RAN node 100 transmits configuration information indicating the configuration to the intermediate node 200B. Then, the intermediate node 200B configures the configuration for the intermediate node 200B. As a result, Flow-5 is configured.

### - Step 560: Configuration of Second Configuration of Intermediate Node 200

As described above, the RAN node 100 (first communication processing unit 131) controls the second configuration of the intermediate node 200, based on the second management information and the third management information.

### -- Configuration of Correspondence relationship of Flows

In particular, in the first example alteration, the second configuration of the intermediate node 200 includes a configuration of correspondence relationship between the higher flow between the RAN node 100 and the intermediate node 200 and the lower flow between the RAN node 100 and the RU 300 (or another intermediate node 200 also operating as an RU).

For example, the configuration of the correspondence relationship includes the address of the RAN node or the intermediate node 200 corresponding to the higher flow and the address of the intermediate node 200 or the RU 300 (or another intermediate node 200 also operating as an RU) corresponding to the lower flow. When the configuration of the correspondence relationship includes the address of the intermediate node 200 corresponding to the lower flow, the address of the intermediate node 200 corresponding to the lower flow is the address on the RU 300 side out of two addresses of the intermediate node 200 in the path of the lower flow (in other words, the address of the intermediate node 200 used by the intermediate node 200 to connect to the RU 300 (or another intermediate node 200 operating as an RU)).

Alternatively, the configuration of the correspondence relationship may include identification information of the higher flow and identification information of the lower flow.

For example, when the RAN node 100 communicates with one or more users via a plurality of RUs, the second configuration of the intermediate node 200 includes a configuration of correspondence relationship between each higher flow between the RAN node 100 and the intermediate node 200 and one or more lower flows between one or more corresponding RUs out of the plurality of RUs and the RAN node 100. The one or more corresponding RUs form one shared cell.

For example, when the intermediate node 200 is one (in other words, a cascaded RU) of the plurality of RUs, the second configuration of the intermediate node 200 includes a configuration of correspondence relationship between the higher flow between the RAN node 100 and the intermediate node 200 and radio communication performed by the intermediate node 200 (RU). The radio communication corresponds to "radio".

### -- Specific Examples

Specific examples of the configuration of the correspondence relationship in the first example alteration is, for example, the same as the specific examples described above with reference to Fig. 20 to Fig. 25 as examples of the first example embodiment. Thus, here, overlapping description will be omitted.

### (2) Second Example Alteration

In the above-described example of the first example embodiment, the intermediate node 200 transmits the third management information to the RAN node 100. In contrast, in the second example alteration of the first example embodiment, the RU 300 (information obtaining unit 347) obtains the third management information, and the RU 300 (first communication processing unit 341) transmits the third management information to the RAN node 100.

Fig. 11 is referred to again. In this specific example, the RU 300A obtains the third management indicating correspondence relationship between Address-3A of the intermediate node 200 and Address-3 of the RU 300A, and transmits the third management to the RAN node 100. The RU 300B obtains the third management indicating correspondence relationship between Address-4A of the intermediate node 200 and Address-4 of the RU 300B, and transmits the third management to the RAN node 100. The RU 300C obtains the third management indicating correspondence relationship between Address-5A of the intermediate node 200 and Address-5 of the RU 300B, and transmits the third management to the RAN node 100. The RAN node 100 receives the third management information from each of the RUs 300A, 300B, and 300C. In this manner, the RAN node 100 obtains pieces of the third management information indicating respective correspondence relationships.

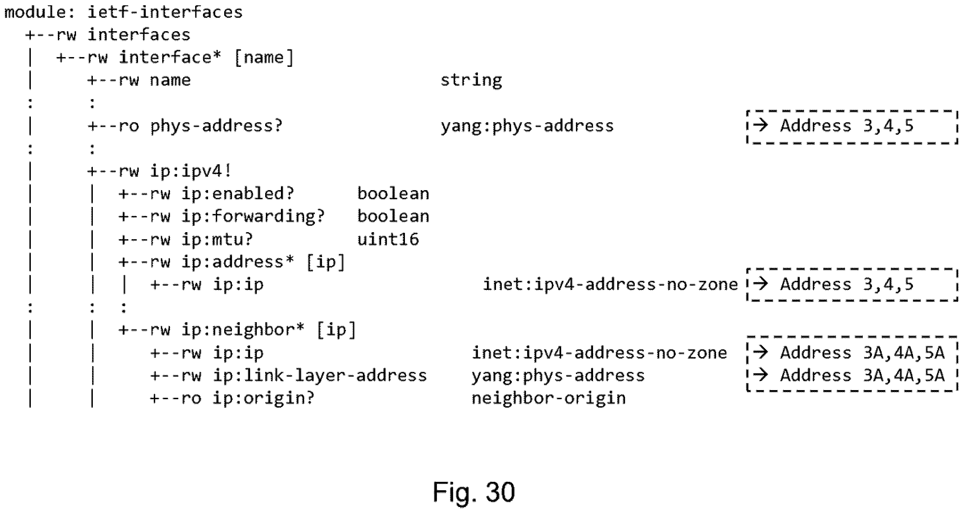

For example, as illustrated in Fig. 30, an interface of the RU 300 for the intermediate node 200 may be configured as ietf-interface, ietf-ip. In this case, the address (Address-3A, Address-4A, or Address-5) of the intermediate node 200 corresponding to the address (Address-3, Address-4, or Address-5) of the RU 300 may be included in neighbour. The RU 300 (information obtaining unit 347) may obtain such information as the third management information.

Note that the second example alteration may be combined with the first example alteration. In other words, in the second example alteration, the flows may be configured as in the case with the first example alteration.

### (3) Third Example Alteration

In the above-described example of the first example embodiment, the RAN node 100 operates as a controller that controls configuration of the RU 300 (and the intermediate node 200). In contrast, in the third example alteration of the first example embodiment, the network management system operates as the controller. Thus, in the third example alteration, operation of the RAN node 100 (operation of the M-plane) in the above-described example of the first example embodiment is performed by the network management system.

Note that the third example alteration may be combined with the second example alteration. In other words, the RU 300 may transmit the third management information to the network management system. The third example alteration may be combined with the first example alteration. In other words, in the third example alteration, the flows may be configured as in the case with the first example alteration.

### <2.7. Additional Notes>

In addition, operation as follows may be performed.

The intermediate node 200 (the information obtaining unit 247 and the first communication processing unit 241) may obtain capability information indicating capability of the intermediate node 200 regarding the C/U-plane and/or the M-plane, and transmit the capability information to a controller (the RAN node 100 or the network management system).

The capability information may include information as follows.
- Information indicating whether the intermediate node 200 can perform radio transmission and reception (for example, RF processing and processing of the lower physical (Low PHY) layer)
- Information indicating whether the duplication processing/combining processing of the intermediate node 200 can be performed
- Information indicating the upper limit number of the duplication processing/combining processing (the upper limit number of branches) of the intermediate node 200
- Information indicating a condition that the duplication processing/combining processing of the intermediate node 200 can be performed (for example, capability of the RU (for example, a part or all of the capability of the RU defined in the M-plane, such as the number of antennas, transmission output, a transmission frequency and/or the number of transmission carriers, a beamforming function, the number of packets that can be simultaneously transmitted) that is connected to the intermediate node 200 is the same, or the like)

The controller (the RAN node 100 or the network management system) (first communication processing unit 131) may control the configuration (for example, the first configuration and/or the second configuration) of the intermediate node 200, based on the capability information.

### <<3. Second Example Embodiment>>

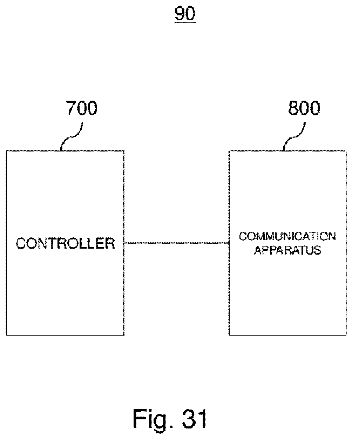

Next, with reference to Fig. 31 to Fig. 33, the second example embodiment of the present invention will be described. The first example embodiment described above is a specific example embodiment, whereas the second example embodiment is a more generalized example embodiment.

### <3.1. Configuration of System>

With reference to Fig. 31, an example of a configuration of a system according to the second example embodiment will be described.

Fig. 31 illustrates an example of a schematic configuration of a system 90 according to the second example embodiment. With reference to Fig. 31, the system 90 includes a controller 700 and a communication apparatus 800.

The controller 700 controls the configuration of the intermediate node and/or the RU. The communication apparatus 800 transmits the management information to the controller 700.

For example, the controller 700 is the RAN node 100 of the first example embodiment, and the communication apparatus 800 is the intermediate node 200 of the first example embodiment.

Alternatively, the controller 700 may be the network management system (NMS), instead of the RAN node 100. The communication apparatus 800 may be the RU 300 of the first example embodiment, instead of the intermediate node 200.

Note that the second example embodiment is not limited to these examples.

### <3.2. Configuration of Controller>

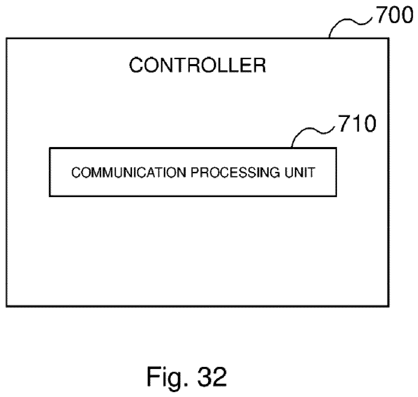

Fig. 32 illustrates an example of a schematic configuration of the controller 700 according to the second example embodiment. With reference to Fig. 32, the controller 700 includes a communication processing unit 710.

The communication processing unit 710 performs processing of the M-plane.

The communication processing unit 710 may be implemented with one or more processors (and memory).

The controller 700 may include a memory configured to store a program (instructions) and one or more processors that can execute the program (instructions). The one or more processors may execute the program and thereby perform operations of the communication processing unit 710. The program may be a program for causing the processor(s) to execute the operations of the communication processing unit 710.

Note that the controller 700 may be virtual. In other words, the controller 700 may be implemented as a virtual machine. In this case, the controller 700 (the virtual machine) may operate as a physical machine (hardware) including a processor, a memory, and the like, and a virtual machine on a hypervisor.

### <3.3. Configuration of Communication Apparatus>

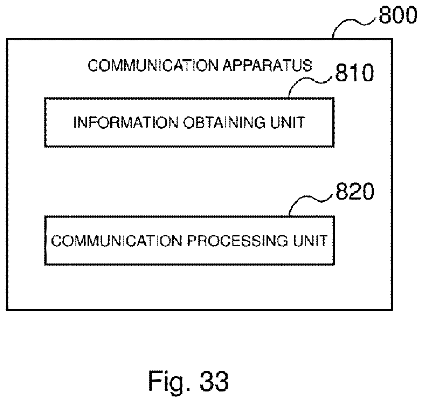

Fig. 33 illustrates an example of a schematic configuration of the communication apparatus 800 according to the second example embodiment. With reference to Fig. 33, the communication apparatus 800 includes an information obtaining unit 810 and a communication processing unit 820.

The information obtaining unit 810 obtains the management information.

The communication processing unit 820 performs processing of the M-plane.

The information obtaining unit 810 and the communication processing unit 820 may be implemented with one or more processors (and memory). The information obtaining unit 810 and the communication processing unit 820 may be implemented with the same processor or may be implemented with separate processors.

The communication apparatus 800 may include a memory configured to store a program (instructions) and one or more processors that can execute the program (instructions). The one or more processors may execute the program and thereby perform operations of the information obtaining unit 810 and the communication processing unit 820. The program may be a program for causing the processor(s) to execute the operations of the information obtaining unit 810 and the communication processing unit 820.

### <3.4. Technical Features>

Next, technical features according to the second example embodiment will be described.

The communication apparatus 800 (information obtaining unit 810) obtains management information indicating correspondence relationship between the address of the intermediate node, which is used by the intermediate node that transmits a signal between the RAN node communicating with one or more UEs and the RU that performs radio frequency processing via the RU to connect to the RU for communication of the C/U-plane, and the address of the RU, which is used by the RU to connect to the intermediate node for communication of the C/U-plane. The communication apparatus 800 (communication processing unit 820) transmits the management information to the controller 700 that controls the configuration of the radio unit.

The controller 700 (communication processing unit 710) receives the management information, and controls the configuration of the RU or the intermediate node, based on the management information.

As an example, the communication apparatus 800 (the information obtaining unit 810 and the communication processing unit 820) operates in a manner similar to that of the intermediate node 200 (the information obtaining unit 247 and the first communication processing unit 241) of the first example embodiment. As an example, the controller 700 (communication processing unit 710) operates in a manner similar to that of the RAN node 100 (first communication processing unit 131) of the first example embodiment. As a matter of course, the second example embodiment is not limited to this example.

With this configuration, implementation of communication of the C/U-plane via the intermediate node is further facilitated.

Descriptions have been given above of the example embodiments of the present invention. However, the present invention is not limited to these example embodiments. It should be understood by those of ordinary skill in the art that these example embodiments are merely examples and that various alterations are possible without departing from the scope and the spirit of the present invention.

For example, the steps in the processing described in the Specification may not necessarily be executed in time series in the order described in the flowcharts. For example, the steps in the processing may be executed in an order different from that described in the flowcharts or may be executed in parallel. Some of the steps in the processing may be deleted, or more steps may be added to the processing.

A method including processing of each of the RAN node, the intermediate node, the RU, the controller, and the communication apparatus described in the Specification may be provided, and a program for causing the processor to execute the processing may be provided. Moreover, a non-transitory computer readable recording medium (non-transitory computer readable medium) having recorded thereon the programs may be provided. It is apparent that such apparatuses, modules, methods, programs, and non-transitory computer readable recording media are also included in the present invention.

The whole or part of the example embodiments disclosed above can be described as, but not limited to, the following supplementary notes.

### (Supplementary Note 1)

A communication apparatus comprising:
an information obtaining unit configured to obtain management information indicating correspondence relationship between an address of an intermediate node and an address of a radio unit performing radio frequency processing, the intermediate node being a node transmitting signals between the radio unit and a radio access network node communicating with one or more user equipments via the radio unit, the address of the intermediate node being used by the intermediate node to connect to the radio unit for communication of a control/user plane, the address of the radio unit being used by the radio unit to connect to the intermediate node for communication of the control/user plane; and
a communication processing unit configured to transmit the management information to a controller controlling a configuration of the radio unit.

### (Supplementary Note 2)

The communication apparatus according to supplementary note 1, wherein
the management information comprises the address of the intermediate node and the address of the radio unit.

### (Supplementary Note 3)

The communication apparatus according to supplementary note 1 or 2, wherein
the communication processing unit is configured to transmit the management information to the controller by using a protocol used for a network configuration.

### (Supplementary Note 4)

The communication apparatus according to supplementary note 3, wherein
the communication apparatus is a server of the protocol, and
the controller is a client of the protocol.

### (Supplementary Note 5)

The communication apparatus according to any one of supplementary notes 1 to 4, wherein
the address of the intermediate node is a media access control (MAC) address of the intermediate node, and
the address of the radio unit is a MAC address of the radio unit.

### (Supplementary Note 6)

The communication apparatus according to any one of supplementary notes 1 to 5, wherein
the address of the intermediate node is an Internet Protocol (IP) address and a User Datagram Protocol (UDP) port number of the intermediate node, and
the address of the radio unit is an IP address and a UDP port number of the radio unit.

### (Supplementary Note 7)

The communication apparatus according to any one of supplementary notes 1 to 6, wherein
the controller is the radio access network node.

### (Supplementary Note 8)

The communication apparatus according to any one of supplementary notes 1 to 6, wherein
the controller is a network management system.

### (Supplementary Note 9)

The communication apparatus according to any one of supplementary notes 1 to 8, wherein
the radio access network node is configured to communicate with one or more user equipments via two or more radio units comprising the radio unit,
the intermediate node is configured to receive a downlink signal transmitted via the two or more radio units, duplicate the downlink signal, and transmit the downlink signal to the radio unit, and
the intermediate node is configured to combine uplink signals received via at least two radio units of the two or more radio units and transmit the combined uplink signal.

### (Supplementary Note 10)

The communication apparatus according to supplementary note 9, wherein
the two or more radio units form one shared cell.

### (Supplementary Note 11)

The communication apparatus according to supplementary note 9 or 10, wherein
the intermediate node is configured to transmit signals between the radio access network node and the two or more radio units,
the intermediate node is configured to receive the downlink signal, duplicate the downlink signal, and transmit the downlink signal to the two or more radio units, and
the intermediate node is configured to combine uplink signals received via the two or more radio units and transmit the combined uplink signal.

### (Supplementary Note 12)

The communication apparatus according to supplementary note 9 or 10, wherein
the two or more radio units and the radio access network node are connected in series, and
the intermediate node is one of the two or more radio units.

### (Supplementary Note 13)

The communication apparatus according to any one of supplementary notes 1 to 12, wherein
the communication apparatus is the intermediate node.

### (Supplementary Note 14)

The communication apparatus according to supplementary note 13, wherein
the information obtaining unit is configured to obtain other management information indicating another address of the intermediate node, said another address being used for control/user plane communication by the intermediate node to connect to the radio access network node or another intermediate node on a side of the radio access network node, and
the communication processing unit is configured to transmit said other management information to the controller.

### (Supplementary Note 15)

The communication apparatus according to supplementary note 13 or 14, wherein
the communication processing unit is configured to receive, from the controller, configuration information indicating a configuration of the intermediate node, and configure the configuration to the intermediate node.

### (Supplementary Note 16)

The communication apparatus according to any one of supplementary notes 1 to 12, wherein
the communication apparatus is the radio unit.

### (Supplementary Note 17)

The communication apparatus according to supplementary note 16, wherein the communication processing unit is configured to receive, from the controller, configuration information indicating a configuration of the radio unit, and configure the configuration to the radio unit.

### (Supplementary Note 18)

The communication apparatus according to any one of supplementary notes 1 to 17, wherein
the radio access network node is a first radio access network node configured to perform processing of at least one lower protocol layer in a protocol stack of the radio access network, and is connected to a second radio access network node configured to perform processing of at least one higher protocol layer in the protocol stack.

### (Supplementary Note 19)

The communication apparatus according to supplementary note 18, wherein the at least one lower protocol layer includes a Radio Link Control (RLC) layer, a Media Access Control (MAC) layer, and a Higher Physical (High PHY) layer, and
the at least one higher protocol layer includes a Packet Data Convergence Protocol (PDCP) layer, a Radio Resource Control (RRC) layer, and a Service Data Adaptation Protocol (SDAP) layer.

### (Supplementary Note 20)

The communication apparatus according to supplementary note 19, wherein
the radio unit performs processing for a Lower Physical (Low PHY) layer.

### (Supplementary Note 21)

A controller comprising:
a communication processing unit configured to receive management information indicating correspondence relationship between an address of an intermediate node and an address of a radio unit performing radio frequency processing, the intermediate node being a node transmitting signals between the radio unit and a radio access network node communicating with a user equipment via the radio unit, the address of the intermediate node being used by the intermediate node to connect to the radio unit for communication of a control/user plane, the address of the radio unit being used by the radio unit to connect to the intermediate node for communication of the control/user plane, and to control a configuration of the radio unit or the intermediate node based on the management information.

### (Supplementary Note 22)

The controller according to supplementary note 21, wherein
the communication processing unit is configured to control the configuration of the radio unit, based on the management information, and
the configuration of the radio unit is a configuration for a flow between the intermediate node or the radio access network node and the radio unit.

### (Supplementary Note 23)

The controller according to supplementary note 22, wherein
the configuration for the flow includes
the address of the radio unit corresponding to the flow, and
the address of the intermediate node corresponding to the flow or an address of the radio access network node corresponding to the flow.

### (Supplementary Note 24)

The controller according to supplementary note 23, wherein
the configuration for the flow further includes a virtual local area network (VLAN) ID.

### (Supplementary Note 25)

The controller according to any one of supplementary notes 21 to 24, wherein
the communication processing unit is configured to control a configuration of the intermediate node, based on the management information.

### (Supplementary Note 26)

The controller according to supplementary note 25, wherein
the communication processing unit is configured to receive other management information indicating another address of the intermediate node, said another address being used for control/user plane communication by the intermediate node to connect to the radio access network node or another intermediate node on a side of the radio access network node, and to control the configuration of the intermediate node, based on the management information and said other management information.

### (Supplementary Note 27)

The controller according to supplementary note 26, wherein
the communication processing unit is configured to control another configuration of the intermediate node, based on said other management information, and
said another configuration of the intermediate node is a configuration of a flow between the radio access network node or said another intermediate node and the intermediate node.

### (Supplementary Note 28)

The controller according to any one of supplementary notes 25 to 27, wherein
the configuration of the intermediate node includes a configuration of correspondence relationship between a higher flow and a lower flow, the higher flow being a flow between the radio access network node or another intermediate node on a side of the radio access network node and the intermediate node, the lower flow being a flow between the intermediate node or the radio access network node and the radio unit.

### (Supplementary Note 29)

The controller according to supplementary note 28, wherein
the configuration of the correspondence relationship includes
an address of the radio access network node or said another intermediate node, or the intermediate node, corresponding to the higher flow, and
an address of the intermediate node or the radio access network node, or the radio unit, corresponding to the lower flow.

### (Supplementary Note 30)

The controller according to supplementary note 28, wherein
the configuration of the correspondence relationship includes identification information of the higher flow and identification information of the lower flow.

### (Supplementary Note 31)

The controller according to any one of supplementary notes 28 to 30, wherein
the radio access network node is configured to communicate with one or more user equipments via a plurality of radio units comprising the radio unit, and
the configuration of the intermediate node includes a configuration of correspondence relationship between each higher flow and one or more lower flows, each higher flow being a flow between the radio access network node or said another intermediate node and the intermediate node, the one or more lower flows being flows between corresponding one or more radio units of the plurality of radio units and the intermediate node or the radio access network node.

### (Supplementary Note 32)

The controller according to supplementary note 31, wherein
the corresponding one or more radio units form one shared cell.

### (Supplementary Note 33)

The controller according to supplementary note 31 or 32, wherein
the intermediate node is one of the plurality of radio units, and
the configuration of the intermediate node includes a configuration of correspondence relationship between a higher flow and radio communication with the intermediate node, the higher flow being a flow between the radio access network node or said another intermediate node and the intermediate node.

### (Supplementary Note 34)

The controller according to any one of supplementary notes 21 to 33, wherein
the communication processing unit is configured to determine the configuration of the radio unit and transmit configuration information indicating the configuration of the radio unit to the radio unit, or determine the configuration of the intermediate node and transmit configuration information indicating the configuration of the intermediate node to the intermediate node.

### (Supplementary Note 35)

A system comprising:
a communication apparatus configured to transmit management information to a controller, the management information indicating correspondence relationship between an address of an intermediate node and an address of a radio unit performing radio frequency processing, the intermediate node being a node transmitting signals between the radio unit and a radio access network node communicating with one or more user equipments via the radio unit, the address of the intermediate node being used by the intermediate node to connect to the radio unit for communication of a control/user plane, the address of the radio unit being used by the radio unit to connect to the intermediate node for communication of the control/user plane, the controller being controlling a configuration of the radio unit; and
the controller configured to receive the management information and control the configuration of the radio unit or the intermediate node, based on the management information.

### (Supplementary Note 36)

A method comprising:
obtaining management information indicating correspondence relationship between an address of an intermediate node and an address of a radio unit performing radio frequency processing, the intermediate node being a node transmitting signals between the radio unit and a radio access network node communicating with one or more user equipments via the radio unit, the address of the intermediate node being used by the intermediate node to connect to the radio unit for communication of a control/user plane, the address of the radio unit being used by the radio unit to connect to the intermediate node for communication of the control/user plane; and
transmitting the management information to a controller controlling a configuration of the radio unit.

### (Supplementary Note 37)

A program that causes a processor to execute:
obtaining management information indicating correspondence relationship between an address of an intermediate node and an address of a radio unit performing radio frequency processing, the intermediate node being a node transmitting signals between the radio unit and a radio access network node communicating with one or more user equipments via the radio unit, the address of the intermediate node being used by the intermediate node to connect to the radio unit for communication of a control/user plane, the address of the radio unit being used by the radio unit to connect to the intermediate node for communication of the control/user plane; and
transmitting the management information to a controller controlling a configuration of the radio unit.

### (Supplementary Note 38)

A non-transitory computer readable recording medium storing a program that causes a processor to execute:
obtaining management information indicating correspondence relationship between an address of an intermediate node and an address of a radio unit performing radio frequency processing, the intermediate node being a node transmitting signals between the radio unit and a radio access network node communicating with one or more user equipments via the radio unit, the address of the intermediate node being used by the intermediate node to connect to the radio unit for communication of a control/user plane, the address of the radio unit being used by the radio unit to connect to the intermediate node for communication of the control/user plane; and
transmitting the management information to a controller controlling a configuration of the radio unit.

### (Supplementary Note 39)

A method comprising:
receiving management information indicating correspondence relationship between an address of an intermediate node and an address of a radio unit performing radio frequency processing, the intermediate node being a node transmitting signals between the radio unit and a radio access network node communicating with a user equipment via the radio unit, the address of the intermediate node being used by the intermediate node to connect to the radio unit for communication of a control/user plane, the address of the radio unit being used by the radio unit to connect to the intermediate node for communication of the control/user plane, and controlling a configuration of the radio unit or the intermediate node based on the management information.

### (Supplementary Note 40)

A program that causes a processor to execute:
receiving management information indicating correspondence relationship between an address of an intermediate node and an address of a radio unit performing radio frequency processing, the intermediate node being a node transmitting signals between the radio unit and a radio access network node communicating with a user equipment via the radio unit, the address of the intermediate node being used by the intermediate node to connect to the radio unit for communication of a control/user plane, the address of the radio unit being used by the radio unit to connect to the intermediate node for communication of the control/user plane, and controlling a configuration of the radio unit or the intermediate node based on the management information.

### (Supplementary Note 41)

A non-transitory computer readable recording medium storing a program that causes a processor to execute:
receiving management information indicating correspondence relationship between an address of an intermediate node and an address of a radio unit performing radio frequency processing, the intermediate node being a node transmitting signals between the radio unit and a radio access network node communicating with a user equipment via the radio unit, the address of the intermediate node being used by the intermediate node to connect to the radio unit for communication of a control/user plane, the address of the radio unit being used by the radio unit to connect to the intermediate node for communication of the control/user plane, and controlling a configuration of the radio unit or the intermediate node based on the management information.

### (Supplementary Note 42)

An intermediate node comprising:
a second communication processing unit configured to transmit a signal between a radio access network node communicating with a user equipment via a radio unit performing radio frequency processing and the radio unit;
an information obtaining unit configured to obtain capability information indicating capability of the intermediate node; and
a first communication processing unit configured to transmit the capability information to a controller controlling a configuration of the radio unit.

### (Supplementary Note 43)

A method comprising:
transmitting a signal between a radio access network node communicating with a user equipment via a radio unit performing radio frequency processing and the radio unit;
obtaining capability information indicating capability of the intermediate node; and
transmitting the capability information to a controller controlling a configuration of the radio unit.

### (Supplementary Note 44)

A program that causes a processor to execute:
transmitting a signal between a radio access network node communicating with a user equipment via a radio unit performing radio frequency processing and the radio unit;
obtaining capability information indicating capability of the intermediate node; and
transmitting the capability information to a controller controlling a configuration of the radio unit.

### (Supplementary Note 45)

A non-transitory computer readable recording medium storing a program that causes a processor to execute:
transmitting a signal between a radio access network node communicating with a user equipment via a radio unit performing radio frequency processing and the radio unit;
obtaining capability information indicating capability of the intermediate node; and
transmitting the capability information to a controller controlling a configuration of the radio unit.

### (Supplementary Note 46)

A controller comprising:
a communication processing unit configured to receive capability information indicating capability of an intermediate node transmitting a signal between a radio access network node communicating with a user equipment via a radio unit performing radio frequency processing and the radio unit, and control a configuration of the radio unit or the intermediate node, based on the capability information.

### (Supplementary Note 47)

A method comprising:
receiving capability information indicating capability of an intermediate node transmitting a signal between a radio access network node communicating with a user equipment via a radio unit performing radio frequency processing and the radio unit, and controlling a configuration of the radio unit or the intermediate node, based on the capability information.

### (Supplementary Note 48)

A program that causes a processor to execute:
receiving capability information indicating capability of an intermediate node transmitting a signal between a radio access network node communicating with a user equipment via a radio unit performing radio frequency processing and the radio unit, and controlling a configuration of the radio unit or the intermediate node, based on the capability information.

### (Supplementary Note 49)

A non-transitory computer readable recording medium storing a program that causes a processor to execute:
receiving capability information indicating capability of an intermediate node transmitting a signal between a radio access network node communicating with a user equipment via a radio unit performing radio frequency processing and the radio unit, and controlling a configuration of the radio unit or the intermediate node, based on the capability information.

This application claims priority based on JP 2019-081342 filed on April 22, 2019, and JP 2019-090641 filed on May 13, 2019, the entire contents of which are incorporated herein.

### Industrial Applicability

In a mobile communication system, implementation of communication of a C/U-plane via an intermediate node 200 is further facilitated.

### Reference Signs List

- 1: System
- 100: Radio access network (RAN) node
- 131: First communication processing unit
- 200: Intermediate node
- 241: First communication processing unit
- 247: Information obtaining unit
- 300: Radio unit (RU)
- 341: First communication processing unit
- 347: Information obtaining unit
- 700: Controller
- 800: Communication apparatus

## Claims

1. A communication apparatus comprising:
an information obtaining unit configured to obtain management information indicating correspondence relationship between an address of an intermediate node and an address of a radio unit performing radio frequency processing, the intermediate node being a node transmitting signals between the radio unit and a radio access network node communicating with one or more user equipments via the radio unit, the address of the intermediate node being used by the intermediate node to connect to the radio unit for communication of a control/user plane, the address of the radio unit being used by the radio unit to connect to the intermediate node for communication of the control/user plane; and
a communication processing unit configured to transmit the management information to a controller controlling a configuration of the radio unit.

2. The communication apparatus according to claim 1, wherein
the communication processing unit is configured to transmit the management information to the controller by using a protocol used for a network configuration.

3. The communication apparatus according to claim 1 or 2, wherein
the address of the intermediate node is a media access control (MAC) address of the intermediate node, and
the address of the radio unit is a MAC address of the radio unit.

4. The communication apparatus according to any one of claims 1 to 3, wherein
the controller is the radio access network node.

5. The communication apparatus according to any one of claims 1 to 4, wherein
the radio access network node is configured to communicate with one or more user equipments via two or more radio units comprising the radio unit,
the intermediate node is configured to receive a downlink signal transmitted via the two or more radio units, duplicate the downlink signal, and transmit the downlink signal to the radio unit, and
the intermediate node is configured to combine uplink signals received via at least two radio units of the two or more radio units and transmit the combined uplink signal.

6. The communication apparatus according to claim 5, wherein
the two or more radio units form one shared cell.

7. The communication apparatus according to any one of claims 1 to 6, wherein
the communication apparatus is the intermediate node.

8. A controller comprising:
a communication processing unit configured to receive management information indicating correspondence relationship between an address of an intermediate node and an address of a radio unit performing radio frequency processing, the intermediate node being a node transmitting signals between the radio unit and a radio access network node communicating with a user equipment via the radio unit, the address of the intermediate node being used by the intermediate node to connect to the radio unit for communication of a control/user plane, the address of the radio unit being used by the radio unit to connect to the intermediate node for communication of the control/user plane, and to control a configuration of the radio unit or the intermediate node based on the management information.

9. A system comprising:
a communication apparatus configured to transmit management information to a controller, the management information indicating correspondence relationship between an address of an intermediate node and an address of a radio unit performing radio frequency processing, the intermediate node being a node transmitting signals between the radio unit and a radio access network node communicating with one or more user equipments via the radio unit, the address of the intermediate node being used by the intermediate node to connect to the radio unit for communication of a control/user plane, the address of the radio unit being used by the radio unit to connect to the intermediate node for communication of the control/user plane, the controller being controlling a configuration of the radio unit; and
the controller configured to receive the management information and control the configuration of the radio unit or the intermediate node, based on the management information.

10. A method comprising:
obtaining management information indicating correspondence relationship between an address of an intermediate node and an address of a radio unit performing radio frequency processing, the intermediate node being a node transmitting signals between the radio unit and a radio access network node communicating with one or more user equipments via the radio unit, the address of the intermediate node being used by the intermediate node to connect to the radio unit for communication of a control/user plane, the address of the radio unit being used by the radio unit to connect to the intermediate node for communication of the control/user plane; and
transmitting the management information to a controller controlling a configuration of the radio unit.
